(19) Europäisches Patentamt
European Patent Office
Office européen des brevets

(11) **EP 1 400 007 B1**

(12) **EUROPÄISCHE PATENTSCHRIFT**

(45) Veröffentlichungstag und Bekanntmachung des Hinweises auf die Patenterteilung:
**05.11.2014   Patentblatt 2014/45**

(21) Anmeldenummer: **02767154.4**

(22) Anmeldetag: **19.06.2002**

(51) Int Cl.:
***H02P 7/29*** (2006.01)

(86) Internationale Anmeldenummer:
**PCT/EP2002/006768**

(87) Internationale Veröffentlichungsnummer:
**WO 2003/003556 (09.01.2003 Gazette 2003/02)**

(54) **STEUERGERÄT FÜR GLEICHSTROMMOTOREN MIT KOMMUTATOR**

CONTROL DEVICE FOR DC MOTORS

ORGANE DE COMMANDE POUR DES MOTEURS A COURANT CONTINU

(84) Benannte Vertragsstaaten:
**AT BE CH CY DE DK ES FI FR GB GR IE IT LI LU MC NL PT SE TR**

(30) Priorität: **26.06.2001   DE 10132909**

(43) Veröffentlichungstag der Anmeldung:
**24.03.2004   Patentblatt 2004/13**

(73) Patentinhaber: **Flextronics International Kft. Tab 8660 (HU)**

(72) Erfinder: **HERKE, Dirk
72622 Nürtingen (DE)**

(74) Vertreter: **Rupprecht, Kay et al
Meissner, Bolte & Partner GbR
Widenmayerstraße 47
80538 München (DE)**

(56) Entgegenhaltungen:
**DE-A- 3 717 481     US-A- 4 479 079
US-A- 5 942 864**

**Beschreibung**

Die Erfindung betrifft eine Vorrichtung mit einem Steuergerät und einem Gleichstrommotor, der mit einem mindestens vier Schleifkontakte aufweisenden Kommutator zur Speisung seiner Motorwicklungen versehen ist, umfassend eine Modulationsstufe, welche mindestens ein mit einer wesentlich über der Motordrehzahl liegenden Taktfrequenz pulsweitenmoduliertes Ansteuersignal erzeugt, und eine durch das mindestens eine Ansteuersignal gesteuerte Ansteuerschaltung, welche mindestens einen den Kommutator speisenden und mit einem durch das pulsweitenmodulierte Ansteuersignal angesteuerten elektronischen Schalter versehenen Lastzweig aufweist, wobei jeweils zwei Schleifkontakte zu einer Schleifkontaktpaarung zusammengefasst sind, wobei zwei Schleifkontaktpaarungen jeweils eine Ansteuergruppe bilden, wobei die Schleifkontaktpaarungen und zugeordnete Motorwicklungen einer Ansteuergruppe parallel über einen eigenen Lastzweig gespeist werden, und wobei in jedem der Lastzweige der elektronische Schalter zwischen einem ersten Anschluss der jeweils eine Ansteuergruppe bildenden Schleifkontaktpaarungen und einem ersten Spannungsanschluss liegt und ein zweiter Anschluss der Schleifkontaktpaarungen der jeweiligen Ansteuergruppe mit einem zweiten Spannungsanschluss in Verbindung steht.

Derartige Vorrichtungen sind aus dem Stand der Technik bekannt, wobei stets der gesamte Kommutator mit allen Schleifkontakten des Gleichstrommotors durch einen einzigen Lastzweig angesteuert wird.

Ein derartiger Lastzweig ist dabei entsprechend der Leistung des Elektromotors zu dimensionieren, wobei insbesondere das Steuergerät so ausgebildet werden muss, dass es dem auftretenden Freilaufstrom standhält und dass die Pulsweitenmodulation in möglichst geringem Maße auf ein die Vorrichtung speisendes Netzwerk rückwirkt.

Die Druckschrift US 4 479 079 A offenbart eine Vorrichtung mit einem Steuergerät und einem Gleichstrommotor mit einem vier Schleifkontakte aufweisenden Kommutator. Dabei wird ein Strom durch zwei diametral gegenüberliegende Schleifkontakte einer Motorwicklung zugeführt. Je nach Position des Rotors wird einer weiteren Motorwicklung ein Strom mittels diametral gegenüberliegender Schleifkontakte zugeführt. Insgesamt sind somit zwei Strompfade vorhanden, wobei der erste Strompfad über einen ersten Schalter und der zweite Strompfad über einen zweiten Schalter gespeist wird, wobei die beiden Schalter im Gegentakt arbeiten, so dass die Strompfade abwechselnd gespeist werden. Somit weist diese bekannte Vorrichtung vier Schleifkontakte auf, von denen zwei eine erste Schleifkontaktpaarung und die anderen beiden eine zweite Schleifkontaktpaarung bilden.

Des Weiteren ist aus der Druckschrift DE 44 26 309 A1 eine Vorrichtung mit einem Steuergerät und einem Gleichstrommotor bekannt, der mit einem vier Schleifkontakte aufweisenden Kommutator zur Speisung seiner Motorwicklungen versehen ist, umfassend eine Modulationsstufe, welche ein pulsweitenmoduliertes Ansteuersignal erzeugt, und eine durch das Ansteuersignal gesteuerte Ansteuerschaltung, welche einen den Kommutator speisenden und mit einem durch das pulsweitenmodulierte Ansteuersignal angesteuerten elektronischen Schalter versehenen Lastzweig aufweist, wobei jeweils zwei Schleifkontakte zu einer Schleifkontaktpaarung zusammengefasst sind, von denen jeweils zwei eine Ansteuergruppe bilden, und wobei die Schleifkontaktpaarungen und die zugeordneten Motorwicklungen einer Ansteuergruppe parallel über einen eigenen Lastzweig gespeist werden.

Der Erfindung liegt die Aufgabe zugrunde, eine Vorrichtung der eingangs genannten Art möglichst kostengünstig auszubilden.

Diese Aufgabe wird erfindungsgemäß durch die Merkmale des Patentanspruchs 1 gelöst.

Demgemäß umfasst die erfindungsgemäße Vorrichtung ein Steuergerät, welches einen Freilaufzweig aufweist, der als Reihenschaltung eine mit dem ersten Spannungsanschluss verbundene Kapazität und eine mit dem zweiten Anschluss der Schleifkontaktpaarungen verbundene Induktivität sowie eine zwischen einem Mittelabgriff zwischen der Kapazität und der Induktivität des Freilaufzweiges und dem ersten Anschluss der Schleifkontaktpaarungen liegende Freilaufdiode aufweist, über welche beim geöffneten elektronischen Schalter ein Freilaufstrom durch die den Schleifkontaktpaarungen zugeordneten Motorwicklung fließt.

Jeder Lastzweig umfasst somit einen mit den Schleifkontaktpaarungen in Reihe geschalteten elektronischen Schalter und ein Freilaufbauteil, welches insbesondere zum Schutz des elektronischen Schalters dient und in der Lage ist, beim Ausschalten des elektronischen Schalters den Freilaufstrom der Motorwicklung zu übernehmen.

Durch den Freilaufzweig ergibt sich der Vorteil, dass, wenn der elektronische Schalter geöffnet wird, vom Speiseanschluss kein Strom mehr über den Schalter fließt und die Motorwicklung für die Dauer der Freilaufzeit im Freilaufzustand betrieben wird. Während dieser Freilaufzeit fließt vom Speiseanschluss ein Strom zu dem Kondensator und lädt diesen auf. Weiterhin fließt in diesem Zustand ein Strom über die Diode über die Motorwicklung zum Masseanschluss. Der Freilaufzweig stellt somit sicher, dass unabhängig von der Stellung des elektronischen Schalters ein Stromfluss nicht unterbrochen wird und somit stets weiterfließt und höchstens betragsmäßig schwankt.

Ein weiterer Vorteil der erfindungsgemäßen Lösung ist darin zu sehen, dass durch die Aufteilung der Leistung auf mindestens zwei Ansteuergruppen und die Zuordnung eines eigenen Lastzweigs zu jeder der Ansteuergruppen die elektrische Leistung, die von jedem Lastzweig zu schalten ist, reduziert wird. Dies bringt erhebliche Kostenvorteile dahingehend mit sich, da somit erheblich günstigere Bauteile verwendet werden können, die zu einer Kostenreduktion führen, trotz der Tatsache, dass statt einem Lastzweig zwei Lastzweige und somit mehr Bauteile vorzusehen sind.

Darüber hinaus besteht ein weiterer erheblicher Vorteil der erfindungsgemäßen Lösung in der größeren Ausfallsicherheit, da selbst bei Ausfall eines Lastzweigs oder einer Motorwicklung der Gleichstrommotor noch läuft, nämlich dadurch, dass der andere Lastzweig noch arbeitet. Damit ist zwar nicht mehr die volle Leistung des Gleichstrommotors erhältlich, jedoch ist es insbesondere bei Zusatzaggregaten für Kraftfahrzeuge, beispielsweise einem Gleichstrommotor zum Betreiben eines Lüfters, von entscheidender Bedeutung, ob das Zusatzaggregat aufgrund eines Bauteilschadens im Lastzweig oder einer defekten Motorwicklung komplett ausfällt oder wenn der Gleichstrommotor zwar nicht mit voller Leistung, jedoch noch im Teilleistungsbereich arbeitet.

Schließlich besteht ein weiterer Vorteil der Erfindung darin, dass beim Übergang vom bestromten Zustand in den Freilaufzustand von der Kapazität und der Induktivität des Freilaufzweigs Schwankungen des zu den Spannungsanschlüssen fließenden Versorgungsstroms reduziert werden und außerdem an dem elektronischen Schalter und am Mittelabgriff des Freilaufzweigs auftretende Spannungsspitzen ausgeglichen werden und sich nicht oder nur unwesentlich auf den ersten Spannungsanschluss und den zweiten Spannungsanschluss auswirken und somit der erste Spannungsanschluss und der zweite Spannungsanschluss gegen unerwünschte Spannungsspitzen abgeschirmt werden.

Im Rahmen der vorliegenden Erfindung werden die Motorwicklungen aus Gründen der Vereinfachung als induktive Lasten bezeichnet, obwohl diese genau genommen auch einen Ohm'schen Widerstand und eine Kapazität besitzen.

Besonders vorteilhaft lässt sich die erfindungsgemäße Lösung auch dann einsetzen, wenn mehr als zwei Schleifkontaktpaarungen vorhanden sind und somit auch mehr als zwei Ansteuergruppen, das heißt beispielsweise mindestens drei Ansteuergruppen oder mehr und somit drei Lastzweige oder mehr eingesetzt werden, denn dann führt der Ausfall eines Lastzweigs oder einer Motorwicklung nur zu einer geringen Leistungsreduktion des Gleichstrommotors, die zumindest, beispielsweise in einem Kraftfahrzeug, einen temporären Notbetrieb erlaubt.

Hinsichtlich der Ansteuerung der verschiedenen Lastzweige sind die unterschiedlichsten Lösungen denkbar. Beispielsweise wäre es denkbar, die Modulationsstufe so auszubilden, dass sie mit einem einzigen pulsweitenmodulierten Ansteuersignal sämtliche Lastzweige ansteuert, so dass die Lastzweige alle parallel mit demselben Ansteuersignal arbeiten.

Besonders vorteilhaft ist es jedoch, wenn die Modulationsstufe für jeden der Lastzweige ein eigenes pulsweitenmoduliertes Ansteuersignal erzeugt. Dies eröffnet die Möglichkeit, die Lastzweige individuell anzusteuern.

Um die unterschiedliche Ansteuerung der Lastzweige jedoch möglichst einfach zu gestalten ist vorzugsweise vorgesehen, dass die mindestens zwei Ansteuersignale dieselbe Periodendauer aufweisen.

Darüber hinaus ist vorteilhafterweise vorgesehen, dass die mindestens zwei Ansteuersignale eine identische Pulsweitenmodulation aufweisen, das heißt ein identisches Verhältnis von Einschaltzeitdauer zur Ausschaltzeitdauer aufweisen. Damit sind insbesondere bei der Erzeugung der pulsweitenmodulierten Ansteuersignale schaltungstechnische Vereinfachungen möglich.

Ferner ist es günstig, insbesondere um die Lastzweige synchronisiert betreiben zu können, wenn die mindestens zwei Ansteuersignale phasenstarr zueinander sind.

Noch vorteilhafter ist es, wenn die pulsweitenmodulierten Ansteuersignale relativ zueinander phasenverschoben sind, da dann die Möglichkeit besteht, die Lastzweige so zu betreiben, dass deren Stromaufnahme zeitlich möglichst optimal verteilt wird, um die Rückwirkungen des Steuergeräts auf ein dieses versorgendes Netz, beispielsweise das Bordnetz eines Kraftfahrzeugs zu minimieren, beispielsweise dadurch, dass der eine der Lastzweige die diesem zugeordnete Motorwicklung möglichst dann bestromt, wenn der andere der Lastzweige die diesem zugeordnete Motorwicklung nicht bestromt.

Besonders günstig lässt sich dies realisieren, wenn der Einschaltzeitpunkt eines der Lastzweige und der Ausschaltzeitpunkt des anderen der Lastzweige relativ zueinander festgelegt sind und wenn der Zeitraum zwischen dem Einschaltzeitpunkt des einen der Lastzweige und dem Einschaltzeitpunkt des anderen der Lastzweige entsprechend dem Wert des einzustellenden PulsweitenModulationsverhältnisses variiert. Diese Lösung erlaubt es, die Lastzweige mit pulsweitenmodulierten Ansteuersignalen zu betreiben, die phasenstarr zueinander sind, wobei jedoch die Phasenlage gegebenenfalls durch das Pulsweitenmodulationsverhältnis variiert wird, um das Ansteuergerät so auszubilden, dass dieses über der Zeit gesehen, einen möglichst gleichmäßigen Strombedarf aufweist.

Besonders zweckmäßig ist es dabei, wenn eine Ansteuerung die Lastzweige so ansteuert, dass einer der Lastzweige dann eingeschaltet wird, wenn der andere der Lastzweige ausgeschaltet ist. Dadurch ist zumindest für einen Teil der Periodendauer oder des Taktzyklus ein Zustand erreichbar, bei welchem zumindest kurzzeitig ein Lastzweig im Freilaufzustand ist und der andere im bestromten Zustand.

Ferner ist es von Vorteil, wenn in einem ersten Betriebsbereich ein Einschalten jedes der Lastzweige nur dann erfolgt, wenn der jeweils andere Lastzweig ausgeschaltet ist. Diese Betriebsweise erlaubt es, den Strombedarf der Lastzweige über der Zeit möglichst gleichmäßig zu gestalten und gegebenenfalls auftretende Unterbrechungen im Strombedarf in einfacher Weise und durch einfache Maßnahmen, beispielsweise durch einen einfachen Kondensator oder auch gegebenenfalls einen Freilaufzweig auszugleichen, da stets sichergestellt ist, dass einer der Lastzweige im Freilaufzustand ist, solange der andere Lastzweig im bestromten Zustand ist.

Vorteilhaft lässt sich dies insbesondere dann realisieren, wenn in dem ersten Betriebsbereich das Ausschalten jedes der Lastzweige mit einem zeitlichen Zwischenraum vor einem Einschalten des jeweils anderen der Lastzweige erfolgt.

Eine vorteilhafte Lösung sieht dabei vor, dass in dem ersten Betriebsbereich zwischen dem Ausschalten jedes der Lastzweige und dem Einschalten des jeweils anderen Lastzweigs eine Mindestzeitdauer von beispielsweise 0,5% der Periodendauer vorgesehen ist, so dass der ausschaltende Lastzweig sicher ausgeschaltet ist, wenn der andere Lastzweig eingeschaltet wird.

Ferner lassen sich in dem ersten Betriebsbereich trotz phasenstarrem Betreiben der Lastzweige die pulsweitenmodulierten Ansteuersignale dadurch variieren, dass in dem ersten Betriebsbereich der Einschaltzeitpunkt des einen Lastzweigs und der Ausschaltzeitpunkt des anderen Lastzweigs relativ zum Ausschaltzeitpunkt des einen Lastzweigs und zum Einschaltzeitpunkt des anderen Lastzweigs variieren. Das Betreiben der Lastzweige im ersten Betriebsbereich ist jedoch nur bis zum Erreichen eines Pulsweitenmodulationsverhältnisses von ungefähr 50% möglich. Bei einem Pulsweitenmodulationsverhältnis von mehr als 50% lassen sich die vorstehend erläuterten Bedingungen nicht realisieren.

Aus diesem Grund ist vorzugsweise vorgesehen, dass in einem zweiten Betriebsbereich ein Einschalten eines der Lastzweige nur beim Ausschalten oder nach dem Ausschalten des anderen der Lastzweige erfolgt. Diese Vorgehensweise ermöglicht es, zumindest teilweise noch das Ausschalten des einen Lastzweigs und das Einschalten des anderen Lastzweigs ungefähr gleichzeitig oder zumindest zeitnah durchzuführen. Besonders geeignet ist diese Lösung, wenn von dem ersten Betriebszustand in einen zweiten Betriebszustand übergegangen wird und Pulsweitenmodulationsverhältnisse von mehr als 50% im zweiten Betriebszustand zur Steuerung der Lastzweige eingesetzt werden.

Eine andere Möglichkeit sieht vor, dass in dem zweiten Betriebsbereich ein Einschalten jedes der Lastzweige nach dem Einschalten und vor dem Ausschalten des jeweils anderen der Lastzweige erfolgt.

Im Sinne der erfindungsgemäßen Lösung wird unter dem Einschalten oder einem Ausschalten eines Lastzweigs insbesondere ein Einschalten und somit ein Schließen oder Ausschalten und somit ein Öffnen des in diesem Lastzweig vorgesehenen elektronischen Schalters verstanden.

Elektronische Schalter im Sinne der vorliegenden Erfindung sind insbesondere Feldeffekttransistoren.

Hinsichtlich der Möglichkeiten, die trotz geeigneter Wahl der pulsweitenmodulierten Ansteuersignale auftretenden Schwankungen im Strombedarf des erfindungsgemäßen Steuergeräts auszugleichen, wurden bislang keine näheren Angaben gemacht. So ist es beispielsweise in einigen Fällen ausreichend, eingangsseitig des Steuergeräts eine ausreichend große Kapazität zum Ausgleich der Spannungs- und Stromschwankungen vorzusehen.

Eine derartige Kapazität ist insbesondere dann ausreichend, wenn die pulsweitenmodulierten Ansteuersignale zeitlich derart phasenverschoben sind, dass sie zumindest in einem nennenswerten Steuerbereich, insbesondere im Bereich eines Pulsweitenmodulationsverhältnisses von weniger als 50%, stets so liegen, dass der eine Lastzweig dann ausgeschaltet ist, wenn der andere Lastzweig eingeschaltet ist.

Prinzipiell wäre es denkbar, jedem Lastzweig einen eigenen Freilaufzweig zuzuordnen. Eine besonders günstige Lösung sieht jedoch vor, dass einem Freilaufzweig mindestens zwei Lastzweige parallel geschaltet sind.

Es ist aber auch denkbar, mehrere Lastzweige dem einen Freilaufzweig parallel zu schalten.

Ein derartiges Parallelschalten mehrerer Lastzweige mit ein und demselben Freilaufzweig ermöglicht es, die erfindungsgemäßen Vorteile bei möglichst geringen Bauteilgrößen und somit einer Ersparnis hinsichtlich des Schaltungsaufwandes zu erreichen.

Insbesondere lassen sich bei dieser Lösung die Ströme durch den Kondensator reduzieren, so dass dessen Lebensdauer steigt und außerdem besteht die Möglichkeit, günstigere Kondensatoren einzusetzen.

Vorzugsweise sind dabei die mehreren Lastzweige dem Freilaufzweig in gleicher Weise parallel geschaltet, wie ein einziger Lastzweig, so dass sich in jedem Lastzweig die ähnlichen Verhältnisse ergeben.

Besonders günstig ist es, wenn die mindestens zwei Lastzweige dieselbe Schaltungskonfiguration aufweisen, das heißt insbesondere einen elektronischen Schalter und das in Reihe geschaltete Schleifkontaktpaar, sowie ein Mittelabgriff zwischen diesen.

Prinzipiell wäre es dabei nicht notwendig, die elektrischen Größen der Bauelemente der verschiedenen Lastzweige identisch auszuführen. Es wäre problemlos möglich, in den Lastzweigen mit unterschiedlich dimensionierten Bauelementen zu arbeiten, beispielsweise wäre es auch denkbar, unterschiedlich dimensionierte Motorwicklungen vorzusehen.

Besonders günstig ist es jedoch, wenn die Motorwicklungen und somit die induktiven Lasten im Wesentlichen dieselbe Induktivität aufweisen.

Um die unerwünschten Spannungsspitzen am Mittelabgriff des jeweiligen Lastzweigs möglichst klein zu halten, ist vorzugsweise vorgesehen, dass ein erster Anschluss der Kapazität des Freilaufzweigs mit einem ersten Anschluss des elektronischen Schalters mittels einer Leitung verbunden ist, deren Induktivität kleiner als 50 Nano Henry ist. Mit einer derartigen niederinduktiven Verbindung lässt sich eine möglichst rasche Stromänderung des Stroms durch den Kondensator erreichen.

Hinsichtlich der Dimensionierung des Freilaufzweigs wurden im Zusammenhang mit der bisherigen Erläuterung desselben keine näheren Angaben gemacht. So sieht ein besonders vorteilhaftes Ausführungsbeispiel vor, dass das Produkt aus dem Wert der Induktivität und dem Wert der Kapazität im Freilaufzweig größer ist als das Quadrat der Zykluszeit der pulsweitenmodulierten Ansteuersignale.

Mit dieser Dimensionierung wird erreicht, dass sich Stromänderungen und Spannungsspitzen beim Ausschalten und Einschalten der elektronischen Schalter nur in dem gewünschten geringen Maße auf den Speisespannungsanschluß und den Masseanschluß auswirken.

Um eine möglichst gute Unterdrückung von Stromänderungen und Spannungsspitzen zu erreichen, ist vorzugsweise vorgesehen, dass der Wert der Kapazität des Freilaufzweigs deutlich größer ist als das Produkt aus dem Maximalwert des Stroms durch die Motorwicklung oder die Motorwicklungen mit der Zykluszeit, dividiert durch die Spannung zwischen dem ersten Spannungsanschluss und dem zweiten Spannungsanschluss.

Bei einer Dimensionierung ist dabei zu beachten, dass als Strom durch die Motorwicklungen bei mehreren Lastzweigen stets der größere Wert von den jeweils maximal möglichen Strömen durch die Motorwicklungen zu berücksichtigen ist.

Die erfindungsgemäße Lösung arbeitet in allen Fällen, in denen einer der Spannungsanschlüsse mit dem Speisespannungsanschluss verbunden ist und der andere der Spannungsanschlüsse mit dem Masseanschluss.

Besonders günstig ist es jedoch, insbesondere für die Anwendung der erfindungsgemäßen Lösung in einem Kraftfahrzeug, wenn der erste Spannungsanschluss mit dem Speisespannungsanschluss verbunden ist und der zweite Spannungsanschluss mit dem Masseanschluss.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

Fig. 1      eine schematische Darstellung eines Schaltungsdiagramms eines ersten Ausführungsbeispiels eines Steuergeräts;

Fig. 2      eine schematische Darstellung der beim ersten Ausführungsbeispiel eingesetzten Ansteuersignale;

Fig. 3      eine schematische Darstellung eines Schaltungsdiagramms eines zweiten Ausführungsbeispiels eines Steuergeräts;

Fig. 4      eine schematische Darstellung der bei dem zweiten Ausführungsbeispiel des Steuergeräts eingesetzten Ansteuersignale in einem ersten Betriebsbereich;

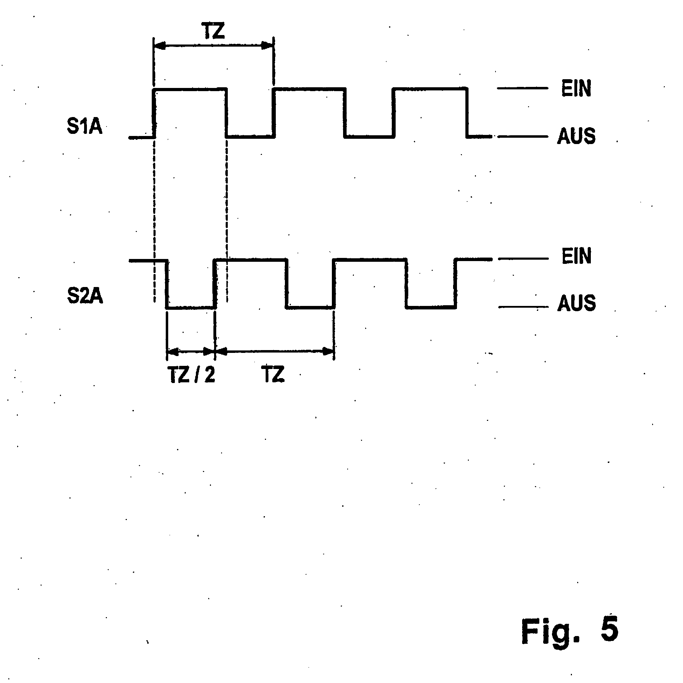

Fig. 5      eine schematische Darstellung der bei dem zweiten Ausführungsbeispiel des Steuergeräts eingesetzten Ansteuersignale in einen zweiten Betriebsbereich;

Fig. 6      eine schematische Darstellung eines Ausschnitts aus dem Schaltungsdiagramm eines erfindungsgemäßen Steuergeräts, wobei der Ausschnitt ausschließlich den ersten Lastzweig im bestromten Zustand zeigt;

Fig. 7      das Schaltungsdiagramm des erfindungsgemäßen Steuergerätes gemäß Fig. 6 im Freilaufzustand des ersten Lastzweigs;

Fig. 8      eine schematische Darstellung eines Schaltungsdiagramms eines weiteren Ausführungsbeispiels eines Steuergeräts mit einem Freilaufzweig und zwei Lastzweigen, welche beide im bestromten Zustand sind;

Fig. 9      das Schaltungsdiagramm des weiteren Ausführungsbeispiels gemäß Fig. 8 im Freilaufzustand beider Lastzweige;

Fig. 10      das Schaltungsdiagramm des weiteren Ausführungsbeispiels gemäß Fig. 8 im Freilaufzustand des zweiten Lastzweigs und im bestromten Zustand des ersten Lastzweigs;

Fig. 11      eine Darstellung von Meßwerten beim weiteren Ausführungsbeispiel gemäß Fig. 8 bei einem Pulsweitenmodulationsverhältnis von 30 %;

Fig. 12      eine Darstellung von Messwerten beim weiteren Ausführungsbeispiel gemäß Fig. 8 bei einem Pulsweitenmodulationsverhältnis von 50 % und

Fig. 13      eine Darstellung von Messwerten des weiteren Ausführungsbeispiels gemäß Fig. 8 bei einem Pulsweitenmodulationsverhältnis von 80 %.

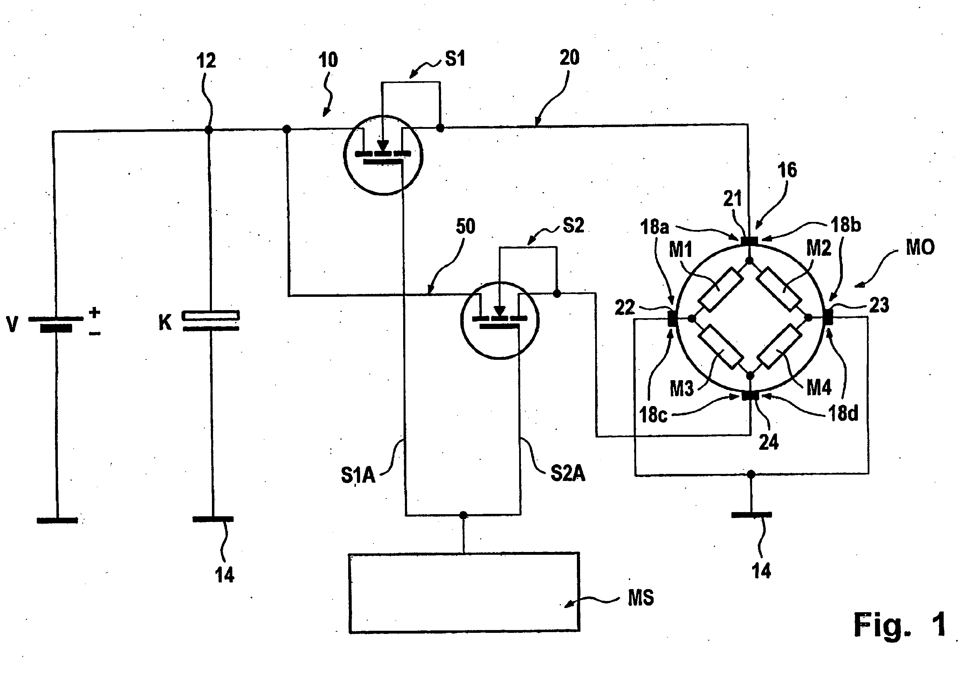

Ein in Fig. 1 dargestelltes Steuergerät umfasst eine als Ganzes mit 10 bezeichnete Ansteuerschaltung für einen Gleichstrommotor MO, mit welchem zum Beispiel in einem Kraftfahrzeug ein Lüfterrad angetrieben wird.

Die Ansteuerschaltung 10 umfasst eine Spannungsquelle V, welche zwischen einem Speisespannungsanschluss 12 und einem Masseanschluss 14 der Ansteuerschaltung 10 liegt und eine Speisespannung U erzeugt.

Mit der Ansteuerschaltung 10 werden über einen Kommutator 16, umfassend beispielsweise vier als Kohlen ausgebildete Schleifkontakte 21, 22, 23, 24, des Gleichstrommotors MO, einzelne Motorwicklungen M, beispielsweise vier Motorwicklungen M1, M2, M3, M4, bestromt, wobei in der in Fig. 1 dargestellten Stellung des Kommutators 16 ein Bestromen der Rotorwicklungen M1 und M2 über eine erste und eine zweite Schleifkontaktpaarung 18a bzw. 18b, die eine erste Ansteuergruppe bilden, und der Motorwicklungen M3 und M4 über eine dritte und vierte Schleifkontaktpaarung 18c bzw. 18d, die eine zweite Ansteuergruppe bilden, erfolgt.

Die Motorwicklungen M1 bis M4 stellen dabei primär induktive Lasten für die Ansteuerschaltung 10 dar.

Zum Ansteuern der Motorwicklungen M1 bis M4 umfasst die Ansteuerschaltung 10 einen ersten Lastzweig 20, in welchem ein elektronischer Schalter S1 und die induktive Last, das heißt in diesem Fall die beiden parallel gespeisten Motorwicklungen M1 und M2, in Reihe geschaltet sind, wobei der elektronische Schalter S1 zwischen dem Schleifkontakt 21 der Schleifkontaktpaarungen 18a und 18b und dem Speisespannungsanschluss 12 liegt und der Schleifkontakt 22 der ersten Schleifkontaktpaarung 18a sowie der Schleifkontakt 23 der zweiten Schleifkontaktpaarung 18b jeweils mit dem Masseanschluss 14 verbunden ist, und folglich die Motorwicklungen M1 und M2 zwischen den beiden Schleifkontakten 21 und 22 bzw. 21 und 23 liegen.

Ferner ist ein zweiter Lastzweig 50 der Ansteuerschaltung 10 vorgesehen, welcher einen elektronischen Schalter S2 aufweist, der mit parallelgeschalteten Schleifkontaktpaarungen 18c und 18d in Reihe geschaltet ist, wobei der elektronische Schalter S2 zwischen dem Speisespannungsanschluss 12 und dem Schleifkontakt 24 der dritten und vierten Schleifkontaktpaarung 18c und 18d liegt, während der Schleifkontakt 22 der dritten Schleifkontaktpaarung 18c und der Schleifkontakt 23 der vierten mit dem Masseanschluss 14 verbunden sind.

Sowohl der Schalter S1 als auch der Schalter S2 des ersten Lastzweigs 20 bzw. des zweiten Lastzweigs 50 sind mit pulsweitenmodulierten Ansteuer-signalen S1A bzw. S2A ansteuerbar, die durch eine Modulationsstufe MS erzeugbar sind.

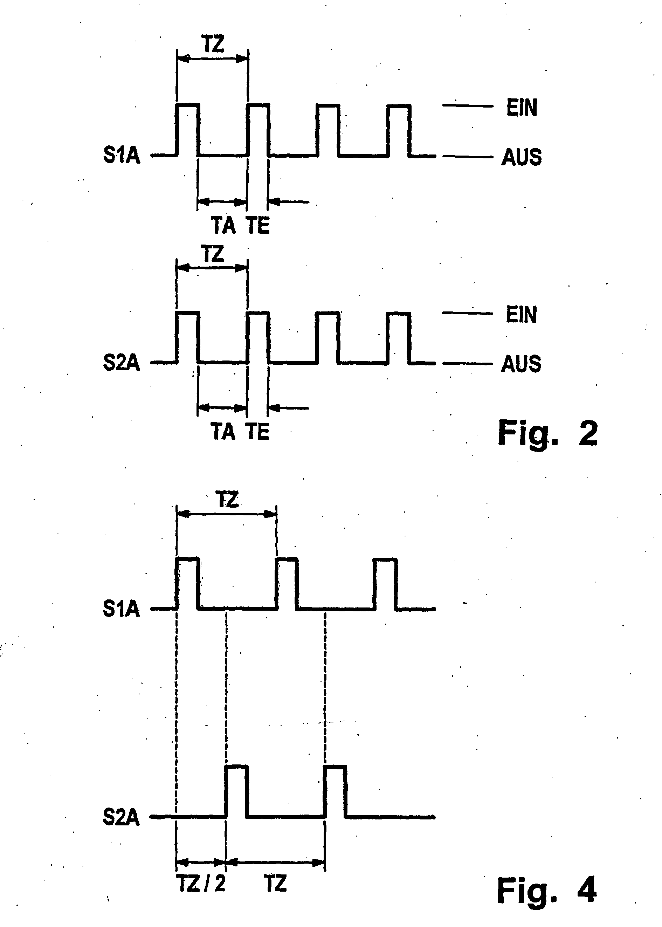

Dabei weisen die pulsweitenmodulierten Ansteuersignale S1A bzw. S2A Periodendauern oder Zykluszeiten TZ auf, die, wie in Fig. 2 dargestellt, vorzugsweise identisch sind.

Darüber hinaus sind vorzugsweise, wie in Fig. 2 dargestellt, auch die Auswahlzeiträume TA und Einschaltzeiträume TE bei beiden Ansteuersignalen S1A und S2A identisch.

Da die Zykluszeit TZ ein Vielfaches der Drehzahl des Motors MO ist, beispielsweise mindestens ein 100-faches, noch besser mindestens ein 300-faches, der Drehzahl des Motors MO entspricht, kann die Betrachtung der Auswirkungen der pulsweitenmodulierten Ansteuersignale S1A und S2A näherungsweise so erfolgen, wie wenn ständig die Motorwicklungen M1 und M2 und ständig die Motorwicklungen M3 und M4 an den Schleifkontakt-paarungen 18a und 18b bzw. 18c und 18d angeschlossen wären. Eine Weiterdrehung des Motors MO hat zur Folge, dass die Motorwicklungen M1 bis M4 in anderer Zuordnung an den Schleifkontaktpaarungen 18a und 18b bzw. 18c und 18d angeschlossen sind, wobei alle Motorwicklungen üblicherweise in erster Näherung dieselbe Induktivität aufweisen und somit auch deren Anschluss an den Schleifkontaktpaarungen 18a und 18b sowie 18c und 18d in gleicher Weise wie der Anschluss der Motorwicklungen M1 und M2 sowie M3 und M4 betrachtet werden kann.

Bei einem zweckmäßigen Ausführungsbeispiel ist die Induktivität der Motorwicklungen M1 bis M4 so groß gewählt, dass der Strom bei der gewählten Zykluszeit TZ, beispielsweise TZ « 50 μ, ungefähr konstant ist. Insbesondere ist TZ so klein zu wählen, dass der Strom durch die Motorwicklungen M1, M2 nicht lückt.

Zur Vermeidung von Rückwirkungen des parallelen Einschaltens der elektronischen Schalter S1 und S2 durch die Ansteuersignale S1A und S2A ist ein Kondensator K zwischen dem Speisespannungsanschluss 12 und der Masse 14 vorgesehen, welcher bei entsprechender Größe in der Lage ist, den Stromfluss von der Spannungsquelle V zu dem Speisespannungsanschluss 12 und von dem Masseanschluss 14 zumindest teilweise zu glätten.

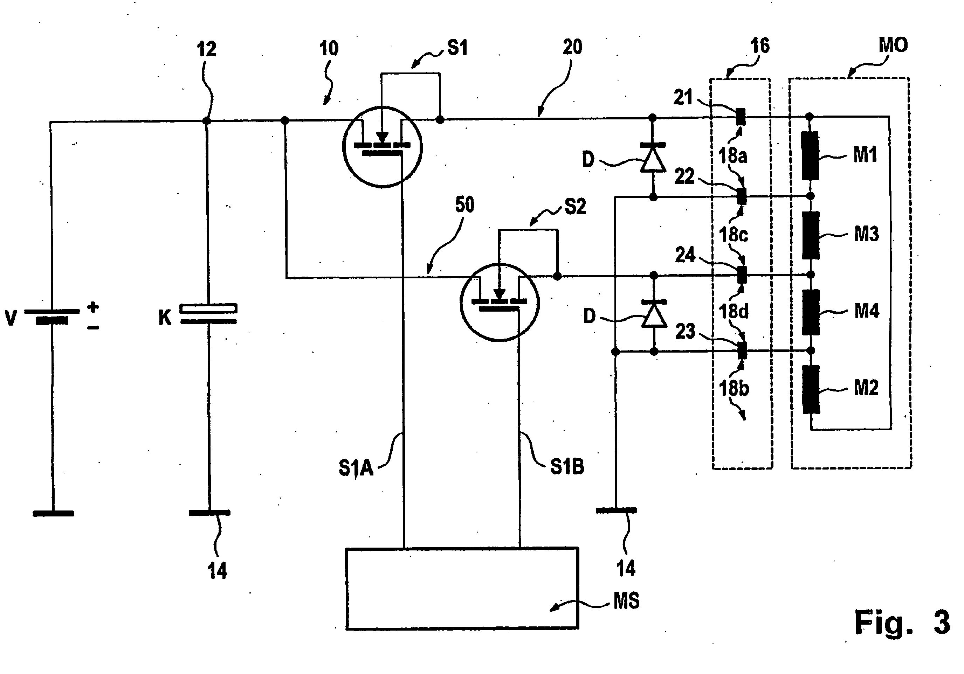

Bei einem anderen Ausführungsbeispiel, dargestellt in Fig. 3, ist der Motor MO durch ein Ersatzschaltbild, umfassend beispielsweise die vier Motorwicklungen M1 bis M4 dargestellt, wobei der Kommutator 16, ebenfalls dargestellt durch ein Ersatzschaltbild, in der gleichen Stellung steht wie beim ersten Ausführungsbeispiel, so dass an die Schleifkontaktpaarung 18a die Motorwicklung M1 und die Schleifkontaktpaarung 18b die Motorwicklung M2 an die Schleifkontaktpaarung 18c die Motorwicklung M3 und an die Schleifkontaktpaarung 18d die Motorwicklung M4 angeschlossen sind und die Schleifkontaktpaarungen 18a und 18b die erste Ansteuergruppe und die Schleifkontaktpaarungen 18c und 18d die zweite Ansteuergruppe bilden.

Zusätzlich ist zum Schutz der in den jeweiligen Lastzweigen 20, 50 vorgesehenen elektronischen Schalter S1, S2 jeweils den parallelgeschalteten Schleifkontaktpaarungen 18a und 18b und den Schleifkontaktpaarungen 18c und 18d eine Freilaufdiode D parallel geschaltet, die beim Ausschalten des jeweiligen elektronischen Schalters S1, S2 den Freilaufstrom übernimmt.

Bei diesem Ausführungsbeispiel arbeitet nun die Modulationsstufe so, dass das erste Ansteuersignal S1A und das zweite Ansteuersignal S2A zwar die gleiche Zykluszeit TZ aufweisen, jedoch die Ansteuersignale S1 und S2 phasenverschoben sind, beispielsweise ist die Phasenverschiebung so gewählt, dass die Ansteuersignale S1A und S2A relativ zueinander um die Zykluszeit TZ/2 relativ zueinander phasenverschoben sind.

Ferner ist der Einfachheit halber nach wie vor die Einschaltzeitdauer TE und die Ausschaltzeitdauer TA jeweils gleich, wobei je nach gewünschter Drehzahl die Einschaltzeitdauer TE und die Ausschaltzeitdauer TA relativ zueinander variieren.

Mit dieser Phasenverschiebung der Ansteuersignale S1A und S2A relativ zueinander besteht die Möglichkeit, zumindest bis zu einem Pulsweiten-Modulationsverhältnis von 50% den einen Lastzweig, beispielsweise den ersten Lastzweig 20 dann einzuschalten, wenn der andere Lastzweig, beispielsweise bei der Lastzweig 50 ausgeschaltet ist, so dass stets in den Zeiten, in denen der eine Lastzweig Strom aus der Spannungsquelle zieht, der andere Lastzweig ausgeschaltet ist, während der andere Lastzweig dann Strom aus der Spannungsquelle zieht, wenn der eine Lastzweig ausgeschaltet ist.

Damit besteht die Möglichkeit, den Kondensator K zwischen dem Speisespannungsanschluss 12 und dem Masseanschluss 14 geringer zu dimensionieren, da dieser lediglich geringere Stromschwankungen auszugleichen hat.

Da es in dem Bereich der Pulsweitenmodulation bis zu einem PulsweitenModulationsverhältnis von 50% möglich ist, den einen Lastzweig stets dann einzuschalten, wenn der andere Lastzweig ausgeschaltet ist, wird in diesem als erstem Betriebsbereich der Ansteuerschaltung bezeichneten Bereich die Phasenverschiebung von TZ/2 zwischen dem ersten Ansteuersignal S1A und S2A beibehalten.

Übersteigt jedoch das Pulsweitenmodulationsverhältnis den Wert von 50%, so wird vorteilhafterweise die Phasenverschiebung zwischen dem ersten Ansteuersignal und dem zweiten Ansteuersignal auf einen Wert von weniger als TZ/2 festgelegt, so dass stets das eine Ansteuersignal S1A dann einschaltet und ausschaltet, wenn das andere Ansteuersignal eingeschaltet ist, so dass eine kurzzeitig erhöhte Stromaufnahme aus der Spannungsquelle V auftritt, die jedoch durch den Kondensator K einfach ausgeglichen wird.

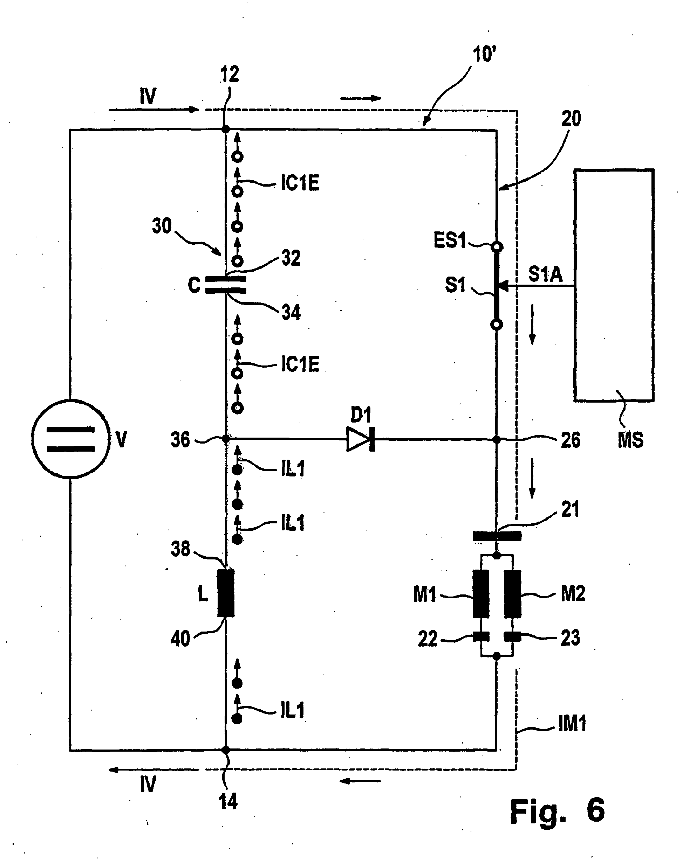

Ein Ausführungsbeispiel eines erfindungsgemäßen Steuergeräts umfasst eine Ansteuerschaltung 10', die für die jeweils zu einer Ansteuergruppe entsprechend Fig. 1 zusammengefassten Schleifkontaktpaarungen, beispielsweise die Schleifkontaktpaarungen 18a und 18b, und die diesen zugeordneten, eine induktive Last darstellenden und parallelgeschalteten Motorwicklungen, beispielsweise die in Fig. 6 dargestellten Motorwicklungen M1 und M2, den entsprechenden Lastzweig, in diesem Beispiel den ersten Lastzweig 20, aufweist, in welchem der elektronische Schalter S1 und die induktive Last, in diesem Fall die Motorwicklungen M1 und M2, in Reihe geschaltet sind, wobei der elektronische Schalter S1 zwischen dem Schleifkontakt 21 der induktiven Last, gebildet durch M1 und M2, und dem Speisespannungsanschluss 12 liegt und dabei mit einem ersten Anschluss ES1 mit dem Speisespannungsanschluss 12 verbunden ist und die Schleifkontakte 22 und 23, welche die Verbindung zur induktiven Last M1 und M2 herstellen, mit dem Masseanschluss 14 verbunden sind.

Auch beim erfindungsgemäßen Ausführungsbeispiel wird exemplarisch von einer relativen Stellung des Kommutators 16 zum Motor MO ausgegangen, die derjenigen des ersten und zweiten Ausführungsbeispiels gemäß Fig. 1 und 3 entspricht.

Ferner ist der Schleifkontakt 21 der induktiven Last M1 und M2 mit einem Mittelabgriff 26 des ersten Lastzweigs 20 verbunden.

Darüber hinaus umfasst die erfindungsgemäße Ansteuerschaltung 10' für jeden der Lastzweige, in diesem Fall für den ersten Lastzweig 20, einen Freilaufzweig 30, in welchem eine Kapazität C und eine Induktivität L in Reihe geschaltet sind, wobei ein erster Anschluss 32 der Kapazität C mit dem Speisespannungsanschluss 12 verbunden ist und ein zweiter Anschluss 34 der Kapazität C mit einem Mittelabgriff 36 des Freilaufzweigs 30 verbunden ist, der seinerseits wiederum mit einem ersten Anschluss 38 der Induktivität L verbunden ist, die über einen zweiten Anschluss 40 mit dem Masseanschluss 14 verbunden ist.

Ferner liegt zwischen dem Mittelabgriff 36 des Freilaufzweigs 30 und dem Mittelabgriff 26 des ersten Lastzweigs 20 eine Freilaufdiode DI des Freilaufzweigs 30 deren Durchlassrichtung so gewählt ist, dass sie einen Strom vom Mittelabgriff 36 zum Mittelabgriff 26 fließen lässt, jedoch in umgekehrter Richtung sperrt.

Der elektronische Schalter S1 ist ferner mittels des pulsweitenmodulierten Ansteuersignals S1A ansteuerbar, welches von einer Modulationsstufe MS entsprechend der geforderten Leistung des Motors M1 und mit einer feststehenden Zykluszeit TZ erzeugt wird.

Die erfindungsgemäße Ansteuerschaltung 10' gemäß dem dritten Ausführungsbeispiel arbeitet dabei folgendermaßen:

Ist der elektronische Schalter S1 durch das pulsweitenmodulierte Ansteuersignal S1A geschlossen, so fließt zum Betrieb der Motorwicklungen M1 und M2 während einer Bestromungszeit TS ein gestrichelt mit Pfeilen gekennzeichneter Strom IM1 vom Speisespannungsanschluss 12 über den ersten elektronischen Schalter S1, den Mittelabgriff 26 und die Motorwicklung M1 zum Masseanschluss 14.

Der Strom IM1 durch die Motorwicklung M1 ist dabei die Summe der sich am Speisespannungsanschluss 12 vereinigenden Teilströme IV und IC1E, wobei die Spannungsquelle V den Teilstrom IV liefert und der Teilstrom IC1E durch Entladen des Kondensators C von dessen erstem Anschluss 32 in Richtung des Speisespannungsanschlusses 12 abfließt.

Ferner fließt von dem Masseanschluss 14 ein Strom IL1 durch die Induktivität L und zwar in Richtung des Mittelabgriffs 36 und vom Mittelabgriff 36 als Strom IC1E zum zweiten Anschluss 34 des Kondensators C, so dass sich an dem Masseanschluss 14 der Strom IM1 aufteilt, wobei der Teilstrom IV zur Spannungsquelle V fließt, während der Teilstrom IL1 durch die Induktivität L zum Kondensator C fließt, wobei IC1E und IL1 in diesem Fall gleich groß sind.

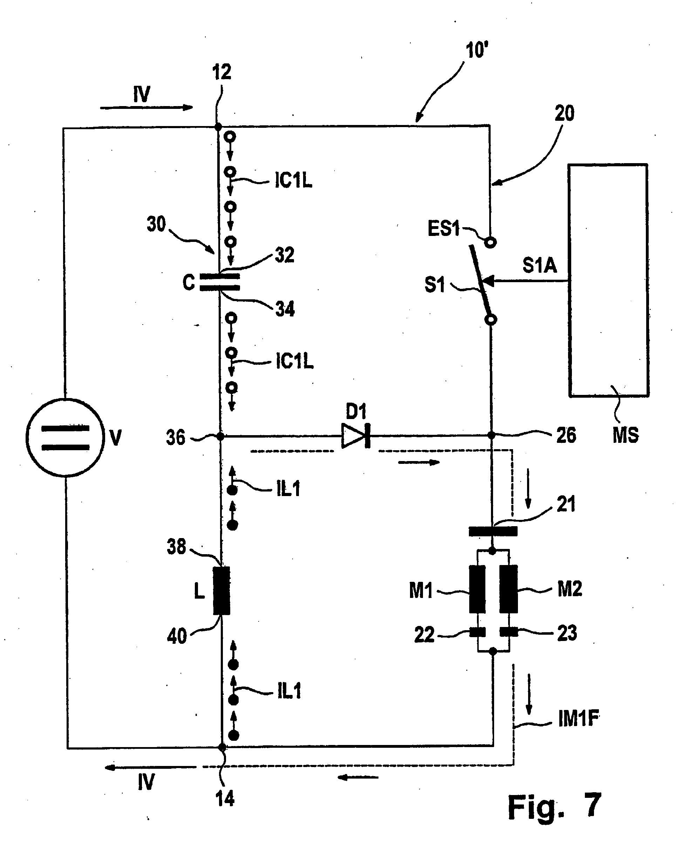

Wird dagegen, wie in Fig. 7 dargestellt, der Schalter S1 durch das Ansteuersignal S1A geöffnet, so fließt vom Speisespannungsanschluss 12 über den elektronischen Schalter S1 kein Strom mehr und die Motorwicklung M1 wird für die Dauer einer Freilaufzeit TF im Freilaufzustand betrieben. Während dieser Zeit fließt vom Speisespannungsanschluss 12 ein entgegengesetzt zum Strom IC1E fließender Strom IC1L zum ersten Anschluss 32 des Kondensators C und lädt diesen auf, wobei der Strom IC1L dem Strom IV entspricht, welcher von der Spannungsquelle V zum Speisespannungsanschluss 12 fließt. Dabei ist der Strom IV während der Bestromungsperiode TS und der Freilaufperiode näherungsweise gleich groß.

Ferner fließt vom zweiten Anschluss 34 des Kondensators C der Strom IC1L zum Mittelabgriff 36.

Im Freilaufzustand fließt vom Mittelabgriff 36 ein Strom IM1F über die Diode 1 zum Mittelabgriff 26 des ersten Lastzweigs 20 und von diesem über die Motorwicklung M1 zum Masseanschluss 14.

Dieser Strom IM1F wird gebildet durch zwei Teilströme, nämlich als ersten Teilstrom den Strom IC1L, welcher durch Aufladen des Kondensators C entsteht und andererseits durch den Strom IL1, der nach wie vor durch die Induktivität L zum Mittelabgriff 36 des Freilaufzweigs 30 fließt.

Ferner teilt sich der Strom IM1 am Masseanschluss 14 wiederum auf in den Strom IL1, der zum zweiten Anschluss 40 der Induktivität L und durch diese hindurchfließt, sowie einem Strom IV, welcher zur Spannungsquelle V zurückfließt.

In diesem Zustand ist der Strom IV gleich dem Strom IC1L, wobei der Strom IC1L theoretisch so lange fließen würde, bis der Kondensator C aufgeladen ist.

Die vorteilhaften Wirkungen des Freilaufzweigs 30 lassen sich bei folgenden Dimensionierungen der Kapazität C und der Induktivität L erreichen.

(1)

$$L \cdot C \quad \gg \quad (TZ)^2$$

(2)

$$C > (\text{Maximalwert IM1}) \cdot \frac{TZ}{U} \cdot 10$$

Der zweite Lastzweig 50 ist zum Betreiben der Motorabwicklungen M3 und M4 identisch zum ersten Lastzweig 20 ausgebildet und dem zweiten Lastzweig 50 ist ebenfalls der Freilaufzweig 30 zugeordnet.

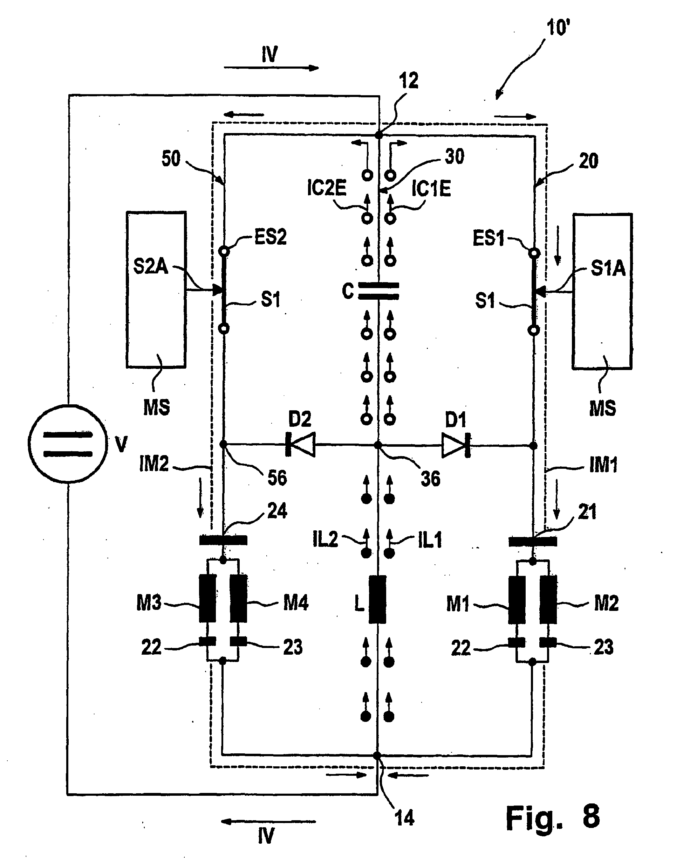

Bei einem weiteren Ausführungsbeispiel einer Ansteuerschaltung 10", dargestellt in den Fig. 8 bis 10, stehen der Motor MO und der Kommutator 16 in derselben Stellung relativ zueinander, wie beim ersten und zweiten Ausführungsbeispiel gemäß Fig. 1 und 3 dargestellt und die Beschreibung geht exemplarisch von diesem Zustand aus. Ferner ist zwischen dem Speisespannungsanschluss 12 und dem Masseanschluss 14 nicht nur der erste Lastzweig 20 dargestellt, welcher in gleicher Weise wie beim dritten Ausführungsbeispiel ausgebildet ist, auf welches hiermit Bezug genommen wird, sondern es ist auch der zweite Lastzweig 50 dargestellt, welcher ähnlich dem ersten Lastzweig 20 ausgebildet und ebenfalls demselben Freilaufzweig 30' parallelgeschaltet ist. Der zweite Lastzweig 50 umfasst daher ebenfalls den elektronischen Schalter S2, welcher mit einer induktiven Last, nämlich den Motorwicklungen M3 und M4, in Reihe geschaltet ist, wobei der elektronische Schalter S2 zwischen dem Speisespannungsanschluss 12 und einem Schleifkontakt 24 für die Motorwicklungen M3 und M4 liegt und dabei mit einem ersten Anschluss ES1 mit dem Speisespannungsanschluss 12 verbunden ist und die Schleifkontakte 22 und 23 für die Motorwicklungen M3 und M4 mit dem Masseanschluss 14 verbunden ist.

Ferner ist der zweite Lastzweig 50 mit einem Mittelabgriff 56 versehen, wobei zwischen dem Mittelabgriff 56 und dem Mittelabgriff 36 des Freilaufzweigs 30' eine Diode D2 vorgesehen ist, um welche der Freilaufzweig 30' ergänzt ist, wobei die Diode D2 mit ihrer Durchlassrichtung so geschaltet ist, dass sie einen Strom vom Mittelabgriff 36 zum Mittelabgriff 56 zulässt, jedoch in umgekehrter Richtung sperrt.

Ferner ist der elektronische Schalter S2 durch die Modulationsstufe MS mittels des pulsweitenmodulierten Ansteuersignals S2A ansteuerbar, wobei das Ansteuersignal S2A vorzugsweise dieselbe Zykluszeit TZ aufweist, wie das Ansteuersignal S1A.

Aus Gründen der Übersichtlichkeit der Schaltung, insbesondere auch im Hinblick auf die fließenden Ströme, sind die Schleifkontakte 22 und 23 doppelt dargestellt, obwohl der Kommutator 16 tatsächlich in gleicher Weise wie in Fig. 1 und 3 dargestellt ausgebildet ist.

Für die Dimensionierung der Kapazität C gilt beim zweiten Ausführungsbeispiel

$$C > (\text{Maximalwert IM1, IM2}) \; \frac{TZ}{U} \bullet 10$$

wobei für den (Maximalwert IM1, IM2) der Wert einzusetzen ist, der dem größten maximalen Strom durch die induktive Last in den Lastzweigen 20, 50 entspricht.

Sind nun bei dem weiteren Ausführungsbeispiel gemäß den Fig. 8-10 der Ansteuerschaltung 10' die beiden Schalter S1 und S2 geschlossen, so fließt analog zum erfindungsgemäßen Ausführungsbeispiel über die parallelgeschalteten Motorwicklungen M1 und M2 der Strom IM1 und über die parallelgeschalteten Motorwicklungen M3 und M4 der Strom IM2, wobei die Ströme IM1 und IM2 jeweils aus zwei Teilströmen gebildet werden, von denen einer durch den von der Spannungsquelle V gelieferten Strom IV geliefert wird und der andere Teilstrom durch die Ströme IC1E bzw. IC2E, die beim Entladen der Kapazität C entstehen, wobei der Teilstrom IC1E zum Strom IM1 durch die Motorwicklungen M1 und M2 und der Teilstrom IC2E zum Strom IM2 durch die Motorwicklungen M3 und M4 beitragen.

Ferner fließen entsprechend dem in Fig. 1 dargestellten Ausführungsbeispiel auch beim in Fig. 3 dargestellten Ausführungsbeispiel die Ströme IL1 und IL2 durch die Induktivität L, wobei die Ströme IL1 und IL2 den Strömen IC1E und IC2E entsprechen.

Ferner teilen sich die Ströme IM1 und IM2 am Masseanschluss 14 wiederum in die Teilströme IL1 bzw. IL2 sowie weitere Teilströme, die den zur Spannungsquelle V fließenden Strom IV ergeben.

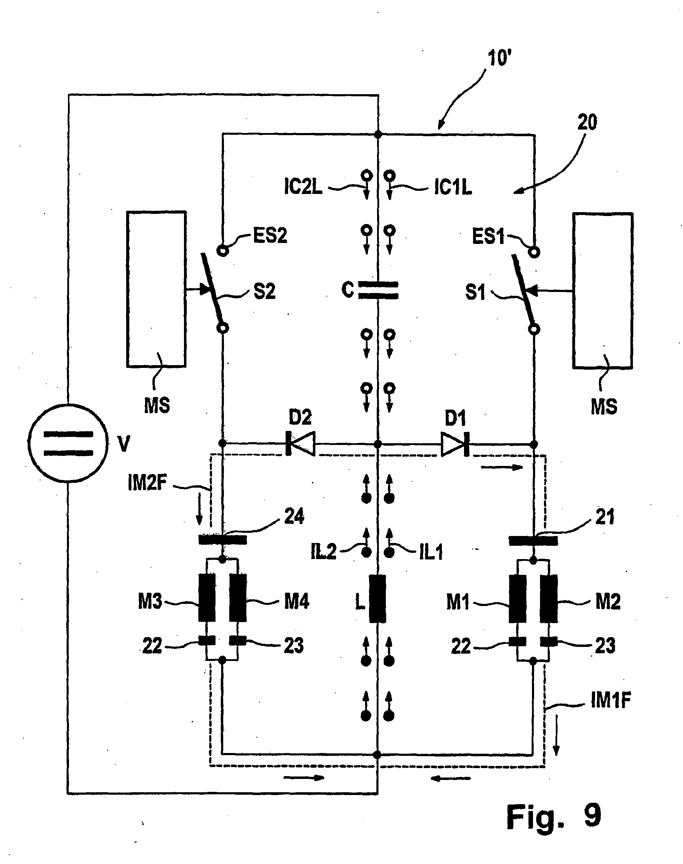

Sind, wie in Fig. 9 dargestellt, beide Schalter S1 und S2 ausgeschaltet, so ergeben sich Verhältnisse, die denen des zweiten Ausführungsbeispiels, dargestellt in Fig. 7, entsprechen. Das heißt, dass jeweils durch die Motorwicklungen M1 und M2 sowie M3 und M4 die Freilaufströme IMIF und IM2F, die jeweils wieder die Summe aus den Strömen IC1L bzw. IC2L sowie IL1 und IL2 darstellen, analog dem Freilaufzustand des in Fig. 7 dargestellten und beschriebenen Ausführungsbeispiels.

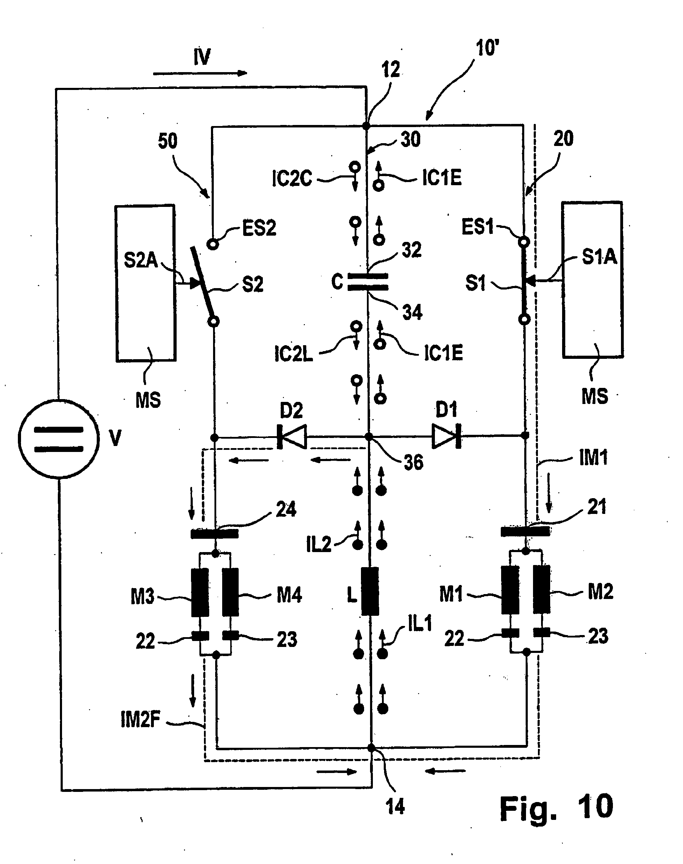

Das Ausführungsbeispiel des Steuergeräts mit der Ansteuerschaltung 10" kann jedoch, wie in Fig. 10 dargestellt in einem weiteren Zustand betrieben werden, nämlich in einem Zustand, in welchem beispielsweise der elektronische Schalter S1 geschlossen und der elektronische Schalter S2 geöffnet ist.

In diesem Fall fließt im ersten Lastzweig 20 analog dem in Fig. 6 und 8 dargestellten Fall der Strom IM1 durch die Motorwicklungen M1 und M2, während im zweiten Lastzweig 50 aufgrund des geöffneten Schalters S2 der Freilaufzustand vorliegt, so dass in diesem der Strom IM2F fließt, analog Fig. 7 und 9.

Dies führt im Freilaufzweig 30 dazu, dass entsprechend dem Zustand des ersten Lastzweiges 20 von dem ersten Anschluss 32 der Kapazität C der Strom IC1E zum Speisespannungsanschluss 12 fließt, um als Teilstrom mit einem weiteren Teilstrom des Stroms IV den Strom IM1 zu bilden, wobei aufgrund des Stroms IM1 durch den ersten Lastzweig 20 auch durch die Induktivität L der Strom IL1 fließt.

Andererseits ist der zweite Lastzweig 50 im Freilaufzustand, was bedeutet, dass von dem zweiten Anschluss 34 des Kondensators C ein Strom IC2L zum Mittelabgriff 36 fließt und außerdem vom Speisespannungsanschluss 12 ein Strom IC2L zum ersten Anschluss 34 der Kapazität C fließt, wobei durch den Strom IC2L ein Laden der Kapazität C erfolgt.

Ferner führt der Freilaufzustand im zweiten Lastzweig 50 dazu, dass durch die Induktivität L der Strom IL2 von dem Basisanschluss 14 zum Mittelabgriff 36 führt und zusammen mit dem Strom IC2L sich zum Strom IM2F addiert, welcher durch die zweite Motorwicklung M2 fließt.

Wie ein Vergleich der Richtungen der Ströme IC1E und IC2L zeigt, fließen diese gegensinnig, so dass diese sich zumindest teilweise aufheben, so dass je nachdem, ob der Strom IC1E oder der Strom IC2L überwiegt, ein resultierender Strom entweder den Kondensator C entlädt oder auflädt, wobei dieser resultierende Strom kleiner ist als die Beträge der Ströme IC1E und IC2L.

Darüber hinaus ist bei dem Schaltzustand des Ausführungsbeispiels gemäß Fig. 10 deutlich zu erkennen, dass die Ströme IL1 und IL2, wie sich auch aus den Schaltzuständen gemäß Fig. 8 und Fig. 9 ergibt, zumindest ihre Richtung beibehalten und nur betragsmäßig schwanken können, während sich beim Vergleich der Ströme IC1E oder IC2E und IC1L oder IC2L zeigt, dass diese abhängig davon, welche der Motorwicklungen M1 und M2 und/oder M3 und M4 im Freilaufzustand ist, ihre Richtung ändern, wobei sie in dem Fall, in dem ein Teil der Motorwicklungen, näMlich die Motorwicklungen M1 und M2, im bestromten Zustand sind und der andere Teil der Motorwicklungen, näMlich die Motorwicklungen M3 und M4, im Freilaufzustand sind, sich die Ströme IC1E und IC2L zumindest teilweise aufheben, so dass in Summe lediglich ein geringer Entlade- oder Ladestrom der Kapazität fließt.

Darüber hinaus stellt der Freilaufzweig 30 sicher, dass der von der Spannungsquelle V fließende Strom IV unabhängig von der Stellung der elektronischen Schalter S1 oder S2 im Wesentlichen nicht unterbrochen wird und somit stets weiterfließt und höchstens betragsmäßig schwankt.

Da dann, wenn gemäß Fig. 10 ein Teil der Motorwicklungen M1, M2, M3, M4, beispielsweise die Motorwicklungen M1 und M2, im bestromten Zustand sind und der andere Teil der Motorwicklungen, beispielsweise die Motorwicklungen M3 und M4, im nicht bestromten Zustand sind, die Ströme IC1E und IC2L sich zumindest teilweise aufheben, ist die Belastung des Freilaufzweigs 30 dann minimal, wenn während möglichst langer Perioden innerhalb der Zykluszeit TZ das Auftreten eines derartigen Zustandes angestrebt wird.

Vorzugsweise arbeiten die Modulationsstufen MS so, dass deren Zykluszeit TZ identisch ist.

Ferner ist vorzugsweise vorgesehen, dass die pulsweitenmodulierten Ansteuersignale S1A und S2A nicht nur dieselben Zykluszeiten TZ aufweisen, sondern auch phasenstarr zueinander sind, um den Zustand, dass ein Teil der Motorwicklungen M1, M2, M3, M4, beispielsweise die Motorwicklungen M1 und M2, im bestromten Zustand sind, während der andere Teil der Motorwicklungen M1, M2, M3, M4, beispielsweise die Motorwicklungen M3 und M4, im Freilaufzustand ist. Aus diesem Grund wird bei einem pulsweitenmodulierten Ansteuersignal S1A das pulsweitenmodulierte Ansteuersignal S2A phasenstarr gebildet und zwar so, dass dessen der Bestromungszeit TS entsprechender Einschaltzeitraum TE1 in einen der Freilaufzeit TF entsprechenden Ausschaltzeitraum TA2 des Ansteuersignals S2A fällt, während andererseits ein Einschaltzeitraum TE2 so liegt, dass dieser in einen Ausschaltzeitraum TA1 des ersten pulsweitenmodulierten Ansteuersignals S1A fällt.

Die elektronischen Schalter S1 und S2 sind dabei entsprechend dem ersten Ansteuersignal S1A oder dem zweiten Ansteuersignal S2A in den Zeiträumen TE1 bzw. TE2 geschlossen und in den Zeiträumen TA1 bzw. TA2 geöffnet.

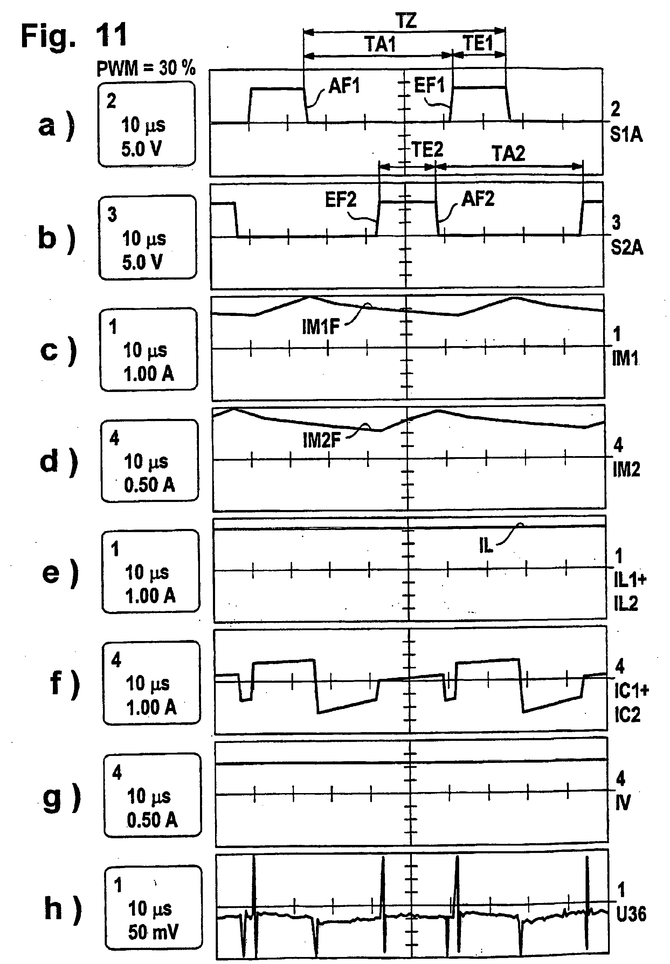

Entsprechend bilden sich die Ströme IM1 und IM2 durch die Motorwicklungen M1 und M2 bzw. M3 und M4 aus, wie in Fig. 11c bzw. d dargestellt, wobei lediglich zur deutlicheren Darstellung der Verhältnisse unterschiedliche Größen der Motorwicklungen M1 und M2 und M3 und M4 angenommen wurden, die zu unterschiedlichen Strömen IM1 und IM2 führen, jedoch üblicherweise die Motorwicklungen M1, M2, M3, M4 identisch ausgebildet sind.

Ferner resultiert daraus, wie in Fig. Ile dargestellt, ein Strom IL1 plus IL2, durch die Induktivität L, welche über der Zeit im Wesentlichen konstant ist, während der Strom IC1 plus IC2, wie in Fig. 11f dargestellt ist, schwankt.

Schließlich zeigt Fig. 11h, dass bei dem Übergang vom Freilaufzustand zum bestromten Zustand Spannungsspitzen der Spannung U36 am Mittelabgriff 36 auftreten können. Diese Spannungsspitzen haben die Ursache in einer nicht idealen Freilauf-Kapazität, die eine nicht zu vernachlässigende Längsinduktivität besitzt, die dazu führt, dass sich der Strom durch die Kapazität C nicht schlagartig ändern kann und damit Spannungsspitzen am Mittelabgriff 36 gegenüber dem Masseanschluss 14 auftreten.

Diese Spannungsspitzen lassen sich durch eine Verbindung des ersten Anschlusses 32 der Kapazität C mit den Schaltern S1, S2 und des zweiten Anschlusses 34 mit den Dioden D1, D2 klein halten, die eine Induktivität von weniger als 50 Nano Henry aufweist.

Diese Spannungsspitzen wirken sich auch nicht auf den Speisespannungsanschluss 12 oder den Masseanschluss 14 aus, da sich diese gegenüber dem Mittelabgriff 36 durch den Kondensator C bzw. die Induktivität L abgeschirmt sind. Daher ist der Strom IV, welcher von der Spannungsquelle V zum Speisespannungsanschluss 12 und vom Masseanschluss 14 zur Spannungsquelle V fließt, im Wesentlichen konstant, wie sich aus Fig. 11g ergibt.

Ferner ist in Fig. 11h beachtlich, dass die Änderung der Spannung an der Kapazität C während einer Zykluszeit TZ gering, vorzugsweise geringer als 50 mV ist, was durch eine große Kapazität C von beispielsweise

$$C > 30 \ (\text{Maximalwert IM1, IM2}) \ \frac{TZ}{U} \cdot 10$$

erreichbar ist.

Wird nun die Pulsweitenmodulation verändert, das heißt wird der Ausschaltzeitraum TA1 zugunsten des Einschaltzeitraums TE1 geändert, so erfolgt vorzugsweise lediglich eine Verschiebung einer Ausschaltflanke AF1 des ersten Ansteuersignals S1A, während eine Einschaltflanke EF1 nicht verschoben wird.

Dagegen wird beim zweiten Ansteuersignal S2A die Einschaltflanke EF2 verschoben, während die Ausschaltflanke AF2 unverändert stehen bleibt.

Schließlich sind das erste Ansteuersignal S1A und das zweite Ansteuersignal S2A derart synchronisiert, dass die Einschaltflanke EF1 und die Ausschaltflanke AF2 in konstanter Phasenbeziehung zueinander stehen, beispielsweise zeitlich in einem derartigen Abstand aufeinanderfolgen, dass die Abschaltflanke AF2 gerade dann den Wert Null erreicht hat, wenn die Einschaltflanke EF1 vom Wert Null zu höheren Werten abweicht.

Dadurch ist durch die Einschaltflanke EF1 und die Ausschaltflanke AF2 eine feste Phasenrelation vorgegeben, die stets sicherstellt, dass der jeweilige Einschaltzeitraum TE1 oder TE2 des einen Ansteuersignals S1A bzw. S2A dann auftritt, wenn beim anderen Ansteuersignal S2A bzw. S1A der Ausschaltzeitraum TA2 bzw. TA1 vorliegt.

Dies ist solange machbar, bis ein Pulsweitenmodulationsverhältnis von fast 50% erreicht ist, denn dann ist bei einer für das erste Ansteuersignal S1A und das zweite Ansteuersignal S2A vorgegebenen identischen Zykluszeit PZ die Möglichkeit erschöpft, dass der Einschaltzeitraum des einen Ansteuersignals S1A oder S2A mit dem Ausschaltzeitraum des anderen Ansteuersignals S2A bzw. S1A zusammenfallen.

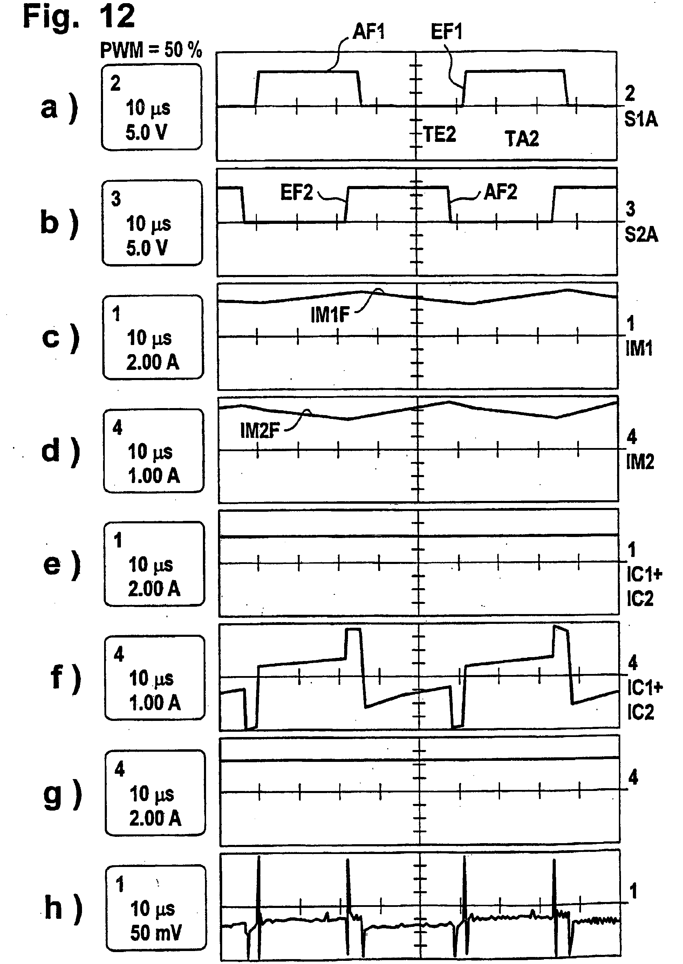

Wird dagegen ein Pulsweitenmodulationsverhältnis von näherungsweise 50% erreicht, wie beispielsweise in Fig. 12 dargestellt, so ist eine kurzzeitige Überlappung der Ansteuersignals S1A und S2A beispielsweise im Bereich der Ausschaltflanke AF1 und der Einschaltflanke EF2 nicht vermeidbar.

Damit sind für einen kurzen Zeitraum aufgrund der zeitlichen Überlappung der Einschaltflanke EF2 mit dem geschlossenen Zustand des elektronischen Schalters S1A bis zur Abschaltflanke AF1 ersten Ansteuersignals S1A ein Zustand erreicht, welcher in Fig. 8 dargestellt ist, während zwischen der Abschaltflanke AF2 und der Einschaltflanke EF1 ein Zustand vorliegt, welcher in Fig. 9 dargestellt ist, das heißt ein Zustand bei dem beide elektronischen Schalter S1, S2 geöffnet sind.

Dies wirkt sich in dieser Weise deutlich erkennbar in der Summe der Ströme IC1 plus IC2 aus, wie in Fig. 12f dargestellt.

Dagegen ist die Auswirkung auf die Motorströme IM1 und IM2 bei einem Vergleich mit den Verhältnissen bei einer Pulsweitenmodulation von 30% zumindest qualitativ ähnlich (Fig. 12c, 12d).

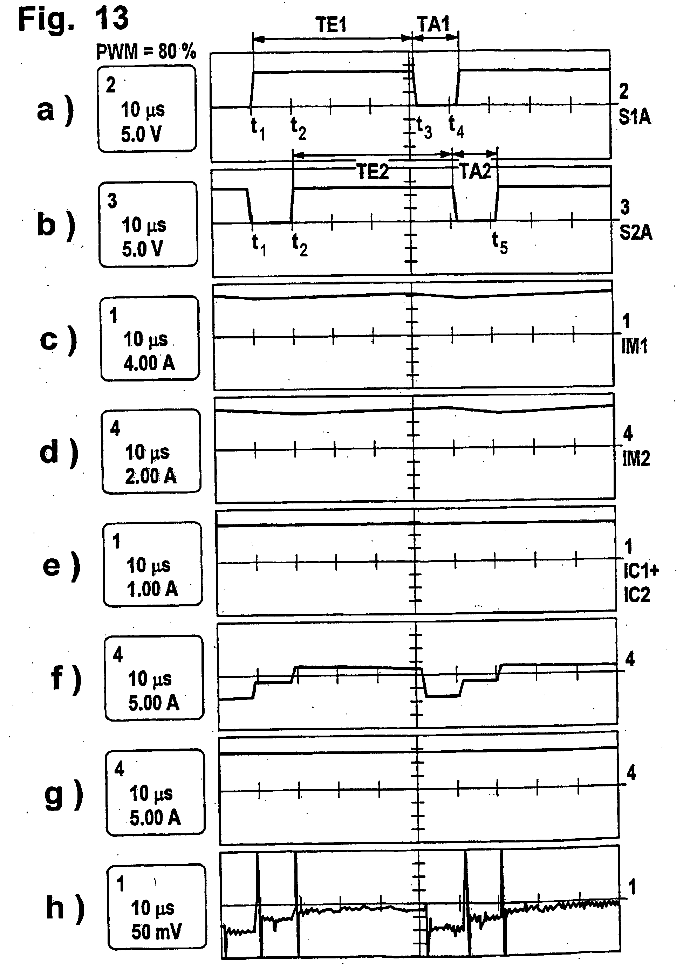

Weisen dagegen die Ansteuersignale S1A und S2A Pulsweitenmodulations-verhältnisse von ungefähr 80% auf, so überwiegt der Einschaltzeitraum TE1 und TE2 den entsprechenden Ausschaltzeitraum TA1 bzw. TA2 (Fig. 13a, 13b). In diesem Fall ist es nicht mehr möglich, dass die beiden Ansteuersignale S1A und S2A so zeitlich zueinander angeordnet sind, dass sich die Einschaltzeiträume TE1 und TE2 möglichst wenig überlagern, wobei die starre Phasenbeziehung zwischen der Ausschaltflanke AF2 des zweiten Ansteuersignals S2A zur Einschaltflanke EF1 des ersten Ansteuersignals aufrechterhalten bleibt.

Zwischen dem Zeitpunkt $t_1$ und dem Zeitpunkt $t_2$ liegen somit Verhältnisse beim zweiten Ausführungsbeispiel im Zustand gemäß Fig. 10 vor, das heißt ein Teil der Motorwicklungen M1, M2, M3, M4 ist im bestromten Zustand, während der andere Teil im Freilaufzustand ist (Fig. 13a, 13b).

Zwischen dem Zeitpunkt $t_2$ und dem Zeitpunkt $t_3$ liegen Verhältnisse gemäß Fig. 8 vor, das heißt alle Motorwicklungen M1, M2, M3, M4 sind im bestromten Zustand. Zwischen den Zeitpunkten $t_3$ bis $t_4$ und $t_4$ bis $t_5$ liegen ebenfalls wieder der Fig. 10 entsprechende Verhältnisse vor, das heißt ein Teil der Motorwicklungen M1, M2, M3, M4 ist im bestromten Zustand und der andere Teil im Freilaufzustand.

Daraus folgt, dass sich bei dem Ausführungsbeispiel gemäß den Fig. 8-10 bei einer Pulsweitenmodulation von mehr als 80% im wesentlichen Schaltungszustände gemäß Fig. 8 und gemäß Fig. 10 auftreten, während Schaltungszustände gemäß Fig. 9 dieses Ausführungsbeispiels nicht auftreten.

Bei Pulsweitenmodulationsverhältnissen von ungefähr 80 % sind die Ströme IM1 und IM2 deutlich höher als bei den Pulsweitenmodulationsverhältnissen von kleiner 80 % (Fig. 13c und 13d). Bei Pulsweitenmodulationsverhältnissen zwischen 80 % und 100 % sind die Ströme IM1 und IM2 größer.

Darüber hinaus erreicht der Strom IL1 plus IL2 bei der Pulsweitenmodulation von 50% sein Maximum (Fig. 13e und 13f).

Bei der Summe der Ströme IC1 und ICL treten, wie in Fig. 13f dargestellt, Schwankungen auf, je nachdem, welcher Teil der Motorwicklungen M1, M2, M3, M4 gerade im bestromten Zustand oder im Freilaufzustand ist.

Außerdem ist auch in diesem Fall der Strom IV von der Spannungsquelle V zum Speisespannungsanschluss 12 und vom Masseanschluss 14 zur Spannungsquelle V im Wesentlichen konstant (Fig. 13g).

## Patentansprüche

**1.** Vorrichtung aufweisend ein Steuergerät und einen Gleichstrommotor, der mit einem mindestens vier Schleifkontakte (21, 22, 23, 24) aufweisenden Kommutator (16) zur Speisung seiner Motorwicklungen (M1, M2, M3, M4) versehen ist, umfassend eine Modulationsstufe (MS), welche mindestens ein mit einer wesentlich über der Motordrehzahl liegenden Taktfrequenz (TZ) pulsweitenmoduliertes Ansteuersignal (S1A, S2A) erzeugt, und eine durch das mindestens eine Ansteuersignal (S1A, S2A) gesteuerte Ansteuerschaltung (10), welche mindestens einen den Kommutator (16) speisenden und mit einem durch das pulsweitenmodulierte Ansteuersignal (S1A, S2A) angesteuerten elektronischen Schalter (S1, S2) versehenen Lastzweig (20, 50) aufweist, wobei

- jeweils zwei Schleifkontakte (21,22; 22,24; 24,23; 23,21) zu einer Schleifkontaktpaarung (18a, 18c, 18d, 18b) zusammengefasst sind, wobei
- zwei Schleifkontaktpaarungen (18a,18b; 18c,18d) jeweils eine Ansteuergruppe bilden, wobei
- die Schleifkontaktpaarungen (18a,18b; 18c,18d) und zugeordnete Motorwicklungen (M1,M2; M3,M4) einer Ansteuergruppe parallel über einen eigenen Lastzweig (20, 50) gespeist werden, und wobei in jedem der Lastzweige (20, 50) der elektronische Schalter (S1, 52) zwischen einem ersten Anschluss (21, 24) der jeweils eine Ansteuergruppe bildenden Schleifkontaktpaarungen (18a, b, c, d) und einem ersten Spannungsanschluss (12) liegt und ein zweiter Anschluss (22, 23) der Schleifkontaktpaarungen (18a, b, c, d) der jeweiligen Ansteuergruppe mit einem zweiten Spannungsanschluss (14) in Verbindung steht,
**dadurch gekennzeichnet,**
**dass** ein Freilaufzweig (30, 30') vorgesehen ist, welcher als Reihenschaltung eine mit dem ersten Spannungsanschluss (12) verbundene Kapazität (C) und eine mit dem zweiten Anschluss (22, 23) der Schleifkontaktpaarungen (18a, b, c, d) verbundene Induktivität (L) sowie eine zwischen einem Mittelabgriff (36) zwischen der Kapazität (C) und der Induktivität (L) des Freilaufzweigs (30, 30') und dem ersten Anschluss (21, 24) der Schleifkontaktpaarungen (18a, b, c, d) liegende Freilaufdiode (D1, D2) aufweist, über welche beim geöffneten elektronischen Schalter (S1, S2) ein Freilaufstrom (IM1F, IM2F) der den Schleifkontaktpaarungen (18a, b, c, d) zugeordneten Motorwicklung (M1, M2, M3, M4) fließt.

2. Vorrichtung nach Anspruch 1,
**dadurch gekennzeichnet,**
**dass** die Modulationsstufe (MS) für jeden der Lastzweige (20, 50) ein eigenes pulsweitenmoduliertes Ansteuersignal (SIA, S2A) erzeugt.

3. Vorrichtung nach einem der voranstehenden Ansprüche,
**dadurch gekennzeichnet,**
**dass** die mindestens zwei Ansteuersignale (S1A, S2A) dieselbe Periodendauer (TZ) aufweisen.

4. Vorrichtung nach einem der voranstehenden Ansprüche,
**dadurch gekennzeichnet,**
**dass** die mindestens zwei Ansteuersignale (S1A, S2A) für die Lastzweige (20, 50) eine identische Pulsweitenmodulation aufweisen.

5. Vorrichtung nach einem der voranstehenden Ansprüche,
**dadurch gekennzeichnet,**
**dass** die mindestens zwei Ansteuersignale (S1A, S2A) phasenstarr zueinander sind.

6. Vorrichtung nach einem der Ansprüche 2 bis 5,
**dadurch gekennzeichnet,**
**dass** die mindestens zwei Ansteuersignale (S1A, S2A) relativ zueinander phasenverschoben sind.

7. Vorrichtung nach einem der voranstehenden Ansprüche,
**dadurch gekennzeichnet,**
**dass** der Einschaltzeitpunkt (EF1) eines der Lastzweige (20, 50) und der Ausschaltzeitpunkt (AF2) des anderen der Lastzweige (20, 50) relativ zueinander festgelegt sind und dass der Zeitraum zwischen dem Einschaltzeitpunkt (EF1) des einen der Lastzweige (20, 50) und der Einschaltzeitpunkt (EF2) des anderen der Lastzweige (20, 50) entsprechend dem Wert des einzustellenden PWM-Verhältnisses variiert.

8. Vorrichtung nach einem der voranstehenden Ansprüche,
**dadurch gekennzeichnet,**
**dass** eine Ansteuerung (42,62) der mindestens zwei Lastzweige (20, 50) so erfolgt, dass einer der Lastzweige (20, 50) dann eingeschaltet wird, wenn der andere der Lastzweige (20, 50) ausgeschaltet ist.

9. Vorrichtung nach einem der voranstehenden Ansprüche,
**dadurch gekennzeichnet,**
**dass** in einem ersten Betriebsbereich ein Einschalten jedes der Lastzweige (20, 50) nur dann erfolgt, wenn der jeweils andere der Lastzweige (20, 50) ausgeschaltet ist.

10. Vorrichtung nach Anspruch 9,
**dadurch gekennzeichnet,**
**dass** in dem ersten Betriebsbereich das Ausschalten jedes der Lastzweige (20, 50) mit einem zeitlichen Zwischenraum vor einem Einschalten des jeweils anderen der Lastzweige (20, 50) erfolgt.

11. Vorrichtung nach Anspruch 10,
**dadurch gekennzeichnet,**
**dass** in dem ersten Betriebsbereich zwischen dem Ausschalten jedes der Lastzweige (20, 50) und dem Einschalten des jeweils anderen der Lastzweige (20, 50) eine Mindestzeitdauer von 0,5 % der Periodendauer (TZ) vorgesehen ist.

12. Vorrichtung nach einem der Ansprüche 9 bis 11,
**dadurch gekennzeichnet,**
**dass** in dem ersten Betriebsbereich der Einschaltzeitpunkt (EF2) des einen Lastzweigs (20, 50) und der Ausschaltzeitpunkt (AF1) des anderen Lastzweiges (20, 50) variieren.

13. Vorrichtung nach einem der voranstehenden Ansprüche,
**dadurch gekennzeichnet,**
**dass** in einem zweiten Betriebsbereich ein Einschalten eines der Lastzweige (20, 50) nur beim Ausschalten oder nach dem Aus- schalten des anderen der Lastzweige (20, 50) erfolgt.

14. Vorrichtung nach einem der Ansprüche 1 bis 7 und 9 bis 12,
**dadurch gekennzeichnet,**
**dass** in dem zweiten Betriebsbereich ein Einschalten jedes der Lastzweige (20, 50) nach dem Einschalten und vor dem Ausschalten des jeweils anderen der Lastzweige (20, 50) erfolgt.

15. Vorrichtung nach einem der voranstehenden Ansprüche,
**dadurch gekennzeichnet,**
**dass** die Ansteuerschaltung eine versorgungsseitig der Lastzweige angeordnete Kapazität (K) aufweist.

16. Vorrichtung nach Anspruch 1,
**dadurch gekennzeichnet,**
**dass** dem einen Freilaufzweig (30') mindestens zwei Lastzweige (20, 50) parallel geschaltet sind.

17. Vorrichtung nach Anspruch 16,
**dadurch gekennzeichnet,**
**dass** dem Freilaufzweig (30) die mindestens zwei Lastzweige (20, 50) in gleicher Weise parallel geschaltet sind.

18. Vorrichtung nach einem der voranstehenden Ansprüche,
**dadurch gekennzeichnet,**
**dass** die mindestens zwei Lastzweige (20, 50) dieselbe Schaltungskonfiguration aufweisen.

19. Vorrichtung nach einem der Ansprüche 16 bis 18,
**dadurch gekennzeichnet,**
**dass** ein erster Anschluss (32) der Kapazität (C) des Freilaufzweigs (30) mit einem ersten Anschluss (ES1, ES2) des elektronischen Schalters (S1, S2) mittels einer Leitung verbunden ist, deren Induktivität kleiner als 50 Nano Henry ist.

20. Vorrichtung nach einem der Ansprüche 16 bis 19,
**dadurch gekennzeichnet,**
**dass** ein zweiter Anschluss (34) der Kapazität (C) des Freilaufzweigs (30) mit der jeweiligen Diode (D1, D2) mit einer Leitung verbunden ist, deren Induktivität kleiner als 50 Nano Henry ist.

21. Vorrichtung nach einem der Ansprüche 16 bis 20,
**dadurch gekennzeichnet,**
**dass** das Produkt aus dem Wert der Induktivität (L) und dem Wert der Kapazität (C) im Freilaufzweig (30, 30') größer ist als das Quadrat der Zykluszeit (TZ) der pulsweitenmodulierten Ansteuersignale (S1A, S2A).

**22.** Vorrichtung nach einem der Ansprüche 16 bis 21,
**dadurch gekennzeichnet,**
**dass** der Wert der Kapazität (C) des Freilaufzweigs (30, 30') größer ist als das Produkt aus dem Maximalwert des Stroms durch die zwischen den jeweiligen Schleifkontaktpaarungen liegende induktive Last (IM1, IM2) mit der zehnfachen Zykluszeit (TZ) dividiert durch die Spannung (U) zwischen Speisespannungsanschluss (12) und Masseanschluss (14).

**Claims**

**1.** Apparatus having a control device and a DC motor which is provided with a commutator (16), which has at least four sliding contacts (21, 22, 23, 24), for feeding the motor windings (M1, M2, M3, M4) of the said DC motor, comprising a modulation stage (MS) which generates at least one drive signal (S1A, S2A) which is pulse-width-modulated by a clock frequency (TZ) which is significantly above the motor rotation speed, and comprising a drive circuit (10) which is controlled by the at least one drive signal (S1A, S2A) and which has at least one load path (20, 50) which feeds the commutator (16) and is provided with an electronic switch (S1, S2) which is driven by the pulse-width-modulated drive signal (S1A, S2A), wherein

- in each case two sliding contacts (21, 22; 22, 24; 24, 23; 23, 21) are combined to form a sliding contact pairing (18a, 18c, 18d, 18b), wherein
- two sliding contact pairings (18a, 18b; 18c, 18d) in each case form a drive group, wherein
- the sliding contact pairings (18a, 18b; 18c, 18d) and associated motor windings (M1, M2; M3, M4) of a drive group are fed in parallel by means of a dedicated load path (20, 50), and wherein, in each of the load paths (20, 50), the electronic switch (S1, S2) is situated between a first connection (21, 24) of the sliding contact pairings (18a, b, c, d), which in each case form a drive group, and a first voltage connection (12), and a second connection (22, 23) of the sliding contact pairings (18a, b, c, d) of the respective drive group is connected to a second voltage connection (14),
**characterized in that**
a freewheeling path (30, 30') is provided which, as a series circuit, has a capacitor (C), which is connected to the first voltage connection (12), and a inductor (L), which is connected to the second connection (22, 23) of the sliding contact pairings (18a, b, c, d), and also a freewheeling diode (D1, D2) which is situated between a centre tap (36), between the capacitor (C) and the inductor (L) of the freewheeling path (30, 30'), and the first connection (21, 24) of the sliding contact pairings (18a, b, c, d) and across which a freewheeling current (IM1F, IM2F) of the motor winding (M1, M2, M3, M4) which is associated with the sliding contact pairings (18a, b, c, d) flows when the electronic switch (S1, S2) is open.

**2.** Apparatus according to Claim 1,
**characterized**
**in that** the modulation stage (MS) generates a dedicated pulse-width-modulated drive signal (S1A, S2A) for each of the load paths (20, 50).

**3.** Apparatus according to either of the preceding claims,
**characterized**
**in that** the at least two drive signals (S1A, S2A) have the same period length (TZ).

**4.** Apparatus according to one of the preceding claims,
**characterized**
**in that** the at least two drive signals (S1A, S2A) have an identical pulse-width modulation for the load paths (20, 50).

**5.** Apparatus according to one of the preceding claims,
**characterized**
**in that** the at least two drive signals (S1A, S2A) are phase-locked to one another.

**6.** Apparatus according to one of Claims 2 to 5,
**characterized**
**in that** the at least two drive signals (S1A, S2A) are phase-shifted relative to one another.

**7.** Apparatus according to one of the preceding claims,

**characterized**

**in that** the switch-on time (EF1) of one of the load paths (20, 50) and the switch-off time (AF2) of the other of the load paths (20, 50) are defined relative to one another, and in that the time period between the switch-on time (EF1) of one of the load paths (20, 50) and the switch-on time (EF2) of the other of the load paths (20, 50) varies in accordance with the value of the PWM ratio which is to be set.

8. Apparatus according to one of the preceding claims,
**characterized**
**in that** driving (42, 62) of the at least two load paths (20, 50) is performed such that one of the load paths (20, 50) is switched on when the other of the load paths (20, 50) is switched off.

9. Apparatus according to one of the preceding claims,
**characterized**
**in that**, in a first operating range, each of the load paths (20, 50) is switched on only when the other of the load paths (20, 50) is switched off.

10. Apparatus according to Claim 9,
**characterized**
**in that**, in the first operating range, each of the load paths (20, 50) is switched off with an intervening time period before the other of the load paths (20, 50) is switched on.

11. Apparatus according to Claim 10,
**characterized**
**in that**, in the first operating range, a minimum time period of 0.5% of the period length (TZ) is provided between switch-off of each of the load paths (20, 50) and switch-on of the other of the load paths (20, 50).

12. Apparatus according to one of Claims 9 to 11,
**characterized**
**in that**, in the first operating range, the switch-on time (EF2) of one load path (20, 50) and the switch-off time (AF1) of the other load path (20, 50) vary.

13. Apparatus according to one of the preceding claims,
**characterized**
**in that**, in a second operating range, one of the load paths (20, 50) is switched on only when the other of the load paths (20, 50) is switched off or after the other of the load paths (20, 50) is switched off.

14. Apparatus according to one of Claims 1 to 7 and 9 to 12,
**characterized**
**in that**, in the second operating range, each of the load paths (20, 50) is switched on after the other of the load paths (20, 50) is switched on and before the other of the load paths is switched off.

15. Apparatus according to one of the preceding claims,
**characterized**
**in that** the drive circuit has a capacitor (K) which is arranged on the supply side of the load paths.

16. Apparatus according to Claim 1,
**characterized**
**in that** at least two load paths (20, 50) are connected in parallel with a freewheeling path (30').

17. Apparatus according to Claim 16,
**characterized**
**in that** the at least two load paths (20, 50) are connected in parallel with the freewheeling path (30) in the same way.

18. Apparatus according to one of the preceding claims,
**characterized**
**in that** the at least two load paths (20, 50) have the same circuit configuration.

19. Apparatus according to one of Claims 16 to 18,

**characterized**

**in that** a first connection (32) of the capacitor (C) of the freewheeling path (30) is connected to a first connection (ES1, ES2) of the electronic switch (S1, S2) by means of a line which has an inductance of less than 50 nanohenries.

**20.** Apparatus according to one of Claims 16 to 19,
**characterized**
**in that** a second connection (34) of the capacitor (C) of the freewheeling path (30) is connected to the respective diode (D1, D2) by a line which has an inductance of less than 50 nanohenries.

**21.** Apparatus according to one of Claims 16 to 20,
**characterized**
**in that** the product of the value of the inductor (L) and the value of the capacitor (C) in the freewheeling path (30, 30') is greater than the square of the cycle time (TZ) of the pulse-width-modulated drive signals (S1A, S2A).

**22.** Apparatus according to one of Claims 16 to 21,
**characterized**
**in that** the value of the capacitor (C) of the freewheeling path (30, 30') is greater than the product of the maximum value of the current through the inductive load (IM1, IM2), which is situated between the respective sliding contact pairings, by ten times the cycle time (TZ), divided by the voltage (U) between the feed voltage connection (12) and the earth connection (14).

**Revendications**

**1.** Dispositif comportant un organe de commande et un moteur à courant continu pourvu d'un commutateur (16) comportant au moins quatre contacts glissants (21, 22, 23, 24) pour alimenter ses bobinages de moteur (M1, M2, M3, M4), comprenant un étage de modulation (MS) produisant au moins un signal de commande (S1A, S2A) à modulation de largeur d'impulsion grâce à une cadence (TZ) située pour l'essentiel au-deçà de la vitesse de rotation du moteur et un circuit de commande (10) commandé par l'au moins un signal de commande (S1A, S2A) commandé comportant au moins une branche de charge (20, 50) alimentant le commutateur (16) et pourvus du contacteur électronique (S1, S2) commandé par le signal de commande (S1A, S2A) à modulation de largeur d'impulsion ;

- deux contacts glissants (21, 22 ; 22, 24 ; 24, 23 ; 23, 21) étant respectivement rassemblés pour former un appariement de contacts glissants (18a, 18c, 18d, 18b) ;
- deux appariements de contacts glissants (18a, 18b ; 18c, 18d) formant respectivement un groupe de commande ; et
- les appariements de contacts glissants (18a, 18b ; 18c, 18d) et les bobinages de moteur (M1, M2 ; M3, M4) associés d'un groupe de commande étant alimentés en parallèle via une branche de charge (20, 50) propre, et le contacteur électronique (S1, S2) reposant dans chacune des branches de charge (20, 50) entre une première borne (21, 24) des appariements de contacts glissants (18a, b, c, d) formant respectivement un groupe de commande et une première borne de tension (12) et une deuxième borne (22, 23) des appariements de contacts glissants (18a, b, c, d) du groupe de commande respectif étant reliée à une deuxième borne de tension (14) ;
**caractérisé en ce que** :

une branche en roue libre (30, 30') est prévue, celle-ci comportant comme circuit en série une capacité (C) reliée à la première borne de tension (12) et une inductivité (L) reliée à la deuxième borne (22, 23) des appariements de contacts glissants (18a, b, c, d) ainsi qu'une diode de roue libre (D1, D2) reposant entre une prise médiane (36) prévue entre la capacité (C) et l'inductivité (L) de la branche en roue libre (30, 30') et la première borne (21, 24) des appariements de contacts glissants (18a, b, c, d) et via laquelle un courant de roue libre (IM1F, IM2F) du bobinage de moteur (M1, M2, M3, M4) associé aux appariements de contacts glissants (18a, b, c, d) circule lorsque le contacteur électronique (S1, S2) est ouvert.

**2.** Dispositif selon la revendication 1, **caractérisé en ce que** l'étage de modulation (MS) produit un signal de commande (S1A, S2A) à modulation de largeur d'impulsion propre pour chacune des branches de charge (20, 50).

**3.** Dispositif selon l'une quelconque des revendications précédentes, **caractérisé en ce que** les au moins deux signaux de commande (S1A, S2A) présentent la même durée périodique (TZ).

**4.** Dispositif selon l'une quelconque des revendications précédentes, **caractérisé en ce que** les au moins deux signaux de commande (S1A, S2A) présentent une modulation de largeur d'impulsion identique pour les branches de charge (20, 50).

**5.** Dispositif selon l'une quelconque des revendications précédentes, **caractérisé en ce que** les au moins deux signaux de commande (S1A, S2A) sont à phase bloquée l'un par rapport à l'autre.

**6.** Dispositif selon l'une quelconque des revendications 2 à 5, **caractérisé en ce que** les au moins deux signaux de commande (S1A, S2A) sont déphasés l'un par rapport à l'autre.

**7.** Dispositif selon l'une quelconque des revendications précédentes, **caractérisé en ce que** le moment de connexion (EF1) d'une des branches de charge (20, 50) et le moment de déconnexion (AF2) de l'autre des branches de charge (20, 50) sont déterminés l'un par rapport à l'autre et que la durée entre le moment de connexion (EF1) d'une des branches de charge (20, 50) et le moment de connexion (EF2) de l'autre des branches de charge (20, 50) varie en fonction de la valeur du rapport PWM de modulation de largeur d'impulsion à régler.

**8.** Dispositif selon l'une quelconque des revendications précédentes, **caractérisé en ce qu'**une commande (42, 62) des au moins deux branches de charge (20, 50) se produit de telle sorte qu'une des branches de charge (20, 50) est connectée lorsque l'autre des branches de charge (20, 50) est déconnectée.

**9.** Dispositif selon l'une quelconque des revendications précédentes, **caractérisé en ce que** dans une première plage de fonctionnement, une connexion de chacune des branches de charge (20, 50) ne se produit que lorsque l'autre respectivement des branches de charge (20, 50) est déconnectée.

**10.** Dispositif selon la revendication 9, **caractérisé en ce que** dans la première plage de fonctionnement, la déconnexion de chacune des branches de charge (20, 50) se produit avant un intervalle de temps précédent la connexion de l'autre respectivement des branches de charge (20, 50).

**11.** Dispositif selon la revendication 10, **caractérisé en ce que** dans la première plage de fonctionnement, une durée minimale de 0,5 % de la durée périodique (TZ) est prévue entre la déconnexion de chacune des branches de charge (20, 50) et la connexion de l'autre respectivement des branches de charge (20, 50).

**12.** Dispositif selon l'une quelconque des revendications 9 à 11, **caractérisé en ce que** dans la première plage de fonctionnement, le moment de connexion (EF2) d'une branche de charge (20, 50) et le moment de déconnexion (AF1) de l'autre branche de charge (20, 50) varient.

**13.** Dispositif selon l'une quelconque des revendications précédentes, **caractérisé en ce que** dans une deuxième plage de fonctionnement, une connexion d'une des branches de charge (20, 50) ne se produit que lors de la déconnexion ou après la déconnexion de l'autre des branches de charge (20, 50).

**14.** Dispositif selon l'une quelconque des revendications 1 à 7 et 9 à 12, **caractérisé en ce que** dans la deuxième plage de fonctionnement, une connexion de chacune des branches de charge (20, 50) se produit après la connexion et avant la déconnexion de l'autre respectivement des branches de charge (20, 50).

**15.** Dispositif selon l'une quelconque des revendications précédentes, **caractérisé en ce que** le circuit de commande comporte une capacité (K) disposée du côté d'alimentation des branches de charge.

**16.** Dispositif selon la revendication 1, **caractérisé en ce qu'**au moins deux branches de charge (20, 50) sont connectées en parallèle à la branche en roue libre (30').

**17.** Dispositif selon la revendication 16, **caractérisé en ce que** les au moins deux branches de charge (20, 50) sont connectées de la même façon en parallèle à la branche en roue libre (30).

**18.** Dispositif selon l'une quelconque des revendications précédentes, **caractérisé en ce que** les au moins deux branches de charge (20, 50) présentent la même configuration de circuit.

**19.** Dispositif selon l'une quelconque des revendications 16 à 18, **caractérisé en ce qu'**une première borne (32) de la capacité (C) de la branche en roue libre (30) est reliée à une première borne (ES1, ES2) du contacteur électronique (S1, S2) à l'aide d'un câble dont l'inductivité est inférieure à 50 Nano Henry.

20. Dispositif selon l'une quelconque des revendications 16 à 19, **caractérisé en ce qu'**une deuxième borne (34) de la capacité (C) de la branche en roue libre (30) dotée de la diode (D1, D2) respective est reliée à un câble dont l'inductivité est inférieure à 50 Nano Henry.

21. Dispositif selon l'une quelconque des revendications 16 à 20, **caractérisé en ce que** le produit de la valeur de l'inductivité (L) et de la valeur de la capacité (C) dans la branche en roue libre (30, 30') est supérieur au carré de la durée cyclique (TZ) des signaux de commande (S1A, S2A) à modulation de largeur d'impulsion.

22. Dispositif selon l'une quelconque des revendications 16 à 21, **caractérisé en ce que** la valeur de la capacité (C) de la branche en roue libre (30, 30') est supérieure au produit de la valeur maximale du courant à travers la charge (IM1, IM2) inductive régnant entre les appariements de contacts glissants respectifs avec la durée cyclique (TZ) décuplée divisée par la tension (U) régnant entre la borne d'alimentation en tension (12) et la borne de masse (14).

EP 1 400 007 B1

12  10  S1  20

16
21
18a  M1  M2  18b  MO
22  23
S1A  50  S2  S2A
M3  M4
18c  18d
24

V  +  −

K

14  14

MS

Fig. 1

Fig. 2

Fig. 4

Fig. 3

EP 1 400 007 B1

Fig. 5

Fig. 6

**Fig. 7**

Fig. 8

Fig. 9

Fig. 10

# Fig. 11

PWM = 30 %

**a )**

| 2 |
|---|
| 10 μs |
| 5.0 V |

TZ
TA1 TE1
AF1 EF1

2
S1A

**b )**

| 3 |
|---|
| 10 μs |
| 5.0 V |

TE2 TA2
EF2 AF2

3
S2A

**c )**

| 1 |
|---|
| 10 μs |
| 1.00 A |

IM1F

1
IM1

**d )**

| 4 |
|---|
| 10 μs |
| 0.50 A |

IM2F

4
IM2

**e )**

| 1 |
|---|
| 10 μs |
| 1.00 A |

IL

1
IL1+
IL2

**f )**

| 4 |
|---|
| 10 μs |
| 1.00 A |

4
IC1+
IC2

**g )**

| 4 |
|---|
| 10 μs |
| 0.50 A |

4
IV

**h )**

| 1 |
|---|
| 10 μs |
| 50 mV |

1
U36

# Fig. 12

# Fig. 13

PWM = 80 %

a) [2 / 10 µs / 5.0 V] — TE1, TA1 — 2 / S1A — t₁ t₂ t₃ t₄

b) [3 / 10 µs / 5.0 V] — TE2, TA2 — 3 / S2A — t₁ t₂ t₅

c) [1 / 10 µs / 4.00 A] — 1 / IM1

d) [4 / 10 µs / 2.00 A] — 4 / IM2

e) [1 / 10 µs / 1.00 A] — 1 / IC1+ IC2

f) [4 / 10 µs / 5.00 A] — 4

g) [4 / 10 µs / 5.00 A] — 4

h) [1 / 10 µs / 50 mV] — 1

**EP 1 400 007 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4479079 A
- DE 4426309 A1